# EUROPÄISCHE PATENTANMELDUNG

(11) **EP 4 016 803 A1**
(43) Veröffentlichungstag der Anmeldung: **22.06.2022**
(21) Anmeldenummer: 20215474.6
(22) Anmeldetag: 18.12.2020
(51) Int. Cl.: H02K 1/20, H02K 1/32, H02K 7/18, H02K 1/14, H02K 1/18, H02K 9/08, H02K 9/04, H02K 1/27

(54) **GENERATOR EINER WINDENERGIEANLAGE, STATORSEGMENT UND STATOR SOWIE ROTORSEGMENT UND ROTOR EINES GENERATORS, WINDENERGIEANLAGE, VERFAHREN ZUR KÜHLUNG EINES GENERATORS**

(71) Anmelder: Wobben Properties GmbH, 26607 Aurich (DE)
(72) Erfinder: Müller, Michael, 26624 Südbrookmerland (DE); Gudewer, Wilko, 26506 Norden (DE); Recktenwald, Andreas, 66121 Saarbrücken (DE); Muik, Tobias, 64625 Bensheim (DE); Jöckel, Stephan, 67259 Kleinniedesheim (DE); Feith, Manuel, 26427 Esens (DE); Giengiel, Wojciech, 26607 Aurich (DE)
(74) Vertreter: Eisenführ Speiser

(57) **Zusammenfassung**

Statorsegment eines Stators eines Generators für eine Windenergieanlage, mit mindestens einem Stator-Blechpaket, welches mindestens zwei Stator-Blechstapel aufweist, wobei jeweils benachbarte Stator-Blechstapel der mindestens zwei Stator-Blechstapel in einer Axialrichtung parallel zueinander beabstandet angeordnet sind und jeweils einen Stator-Kühlungskanal mit einer Stator-Kühlungskanalbreite bilden, durch welchen ein Kühlungsmedium hindurchgeführt werden kann, insbesondere in einer Radialrichtung. Rotorsegment eines Rotors für eine Windenergieanlage, wobei in einer Axialrichtung zwei oder mehrere Magneteinheiten beabstandet zueinander angeordnet sind, wobei die in der Axialrichtung benachbart angeordneten Magneteinheiten einen Umfangsspalt mit einer Spaltbreite zur Zufuhr und zum Verteilen eines Kühlungsmediums definieren.

## Beschreibung

Die Erfindung betrifft einen Generator einer Windenergieanlage. Ferner betrifft die Erfindung ein Statorsegment eines Stators und einen Stator eines Generators für eine Windenergieanlage. Ferner betrifft die Erfindung ein Rotorsegment eines Rotors und einen Rotor eines Generators für eine Windenergieanlage. Ferner betrifft die Erfindung eine Windenergieanlage. Ferner betrifft die Erfindung ein Verfahren zur Kühlung eines Generators.

Insbesondere betrifft die Erfindung einen segmentierten Generator einer Windenergieanlage. Ferner betrifft die Erfindung insbesondere ein Statorsegment eines segmentierten Stators und einen segmentierten Stator eines segmentierten Generators für eine Windenergieanlage. Ferner betrifft die Erfindung insbesondere ein Rotorsegment eines segmentierten Rotors und einen segmentierten Rotor eines segmentierten Generators für eine Windenergieanlage. Ferner betrifft die Erfindung insbesondere ein Verfahren zur Kühlung eines segmentierten Generators.

Sofern in der Beschreibung Bezug zu einem Generator, einem Stator und/oder einem Rotor genommen wird, ist davon vorzugsweise ein segmentierter Generator, ein segmentierter Stator und/oder ein segmentierter Rotor umfasst, sofern dies nicht ausdrücklich ausgeschlossen ist.

Eine Windenergieanlage ist eine Anlage, die kinetische Energie von Wind in elektrische Energie wandelt und in ein Stromnetz einspeist. Für die Wandlung der kinetischen Energie zur elektrischen Energie umfasst die Windenergieanlage einen Generator mit einem Rotor, der relativ zu einem Stator um eine Drehachse drehbar gelagert ist. In Abhängigkeit der Lage der Drehachse wird zwischen einer horizontalen und einer vertikalen Windenergieanlage unterschieden. Bei der horizontalen Windenergieanlage ist die Drehachse horizontal ausgerichtet. Bei der vertikalen Windenergieanlage ist die Drehachse vertikal ausgerichtet. Horizontale Windenergieanlagen sind auch als Horizontalachsen-Windenergieanlagen und vertikale Windenergieanlagen sind auch als Vertikalachsen-Windenergieanlagen bekannt.

Moderne Windenergieanlagen betreffen in der Regel sogenannte Horizontalachsen-Windenergieanlagen, bei denen die Drehachse im Wesentlichen horizontal angeordnet ist und die Rotorblätter eine im Wesentlichen senkrechte Rotorfläche überstreichen. Ferner weisen Windenergieanlagen eine Gondel auf, die um eine im Wesentlichen vertikale Achse drehbar auf einem Turm der Windenergieanlage angeordnet ist.

Der Wind bewirkt in einem Betriebszustand der Windenergieanlage eine Drehbewegung der Rotorblätter, die den Rotor eines Generators, welcher mit den Rotorblättern gekoppelt ist, antreiben. In dem Betriebszustand drehen die Rotorblätter und der Rotor relativ zu einem Stator des Generators. Bedingt durch die Relativbewegung zwischen Rotor und Stator erzeugt der (elektrische) Generator elektrische Energie. In dem Betriebszustand der Windenergieanlage ist die Windenergieanlage am Aufstellort aufgebaut und wird für die Wandlung der kinetischen Energie des Windes in elektrische Energie betrieben.

Windenergieanlagen können getriebelos oder mit einem Getriebe ausgeführt sein. Insbesondere getriebelose Windenergieanlagen weisen Generatoren mit einem großen Durchmesser auf. Es ist durchaus üblich, dass die Generatoren einen Durchmesser von 5 m und mehr aufweisen. Diese Generatoren können als sogenannte Innenläufer oder als sogenannte Außenläufer ausgeführt sein. Bei einem Innenläufer ist der mit den Rotorblättern rotierende Rotor des Generators innerhalb eines feststehenden Stators des Generators angeordnet. Bei einem Außenläufer ist der Rotor außerhalb des Stators angeordnet. Bei dem Außenläufer ist der Stator insbesondere innerhalb des Rotors, vorzugsweise in Bezug zu dem Rotor radial innenliegend angeordnet. Unabhängig von der Art des Generators sind Generatoren üblicherweise an der Gondel, insbesondere einem Maschinenträger, der Windenergieanlage befestigt.

Windenergieanlagen, insbesondere deren Generatoren müssen mit einem Kühlungsmedium gekühlt werden. Insbesondere sind der Stator und der Rotor eines Generators mit dem Kühlungsmedium zu kühlen. Es ist bekannt, einen Generator mit Luft als Kühlungsmedium, insbesondere mit einem erzeugten Strom von Luft zu kühlen. Hierzu muss die Luft insbesondere zwischen dem Rotor und dem Stator zur Kühlung verteilt werden.

Damit der Generator eine hohe Leistung erzielt sind der Rotor und der Stator mit einem möglichst kleinen Luftspalt beabstandet zueinander anzuordnen. Ist der Generator als Außenläufer ausgebildet erstreckt sich der Luftspalt zwischen einer Rotor-Innenumfangsfläche des Rotors und einer Stator-Außenumfangsfläche des Stators. Üblicherweise erstreckt sich der Luftspalt in einer Umfangsrichtung orthogonal zu der Drehachse ringförmig zwischen dem Stator und dem Rotor. Ist der Generator als Innenläufer ausgebildet, erstreckt sich der Luftspalt zwischen einer Stator-Innenumfangsfläche und einer Rotor-Außenumfangsfläche. In einer Axialrichtung parallel zu der Drehachse können sich der Rotor und/oder der Stator mit 1 m und mehr erstrecken. Insofern kann sich auch der Luftspalt zwischen dem Rotor und Stator in der Axialrichtung eine Erstreckung von 1 m oder mehr aufweisen. Es ist auch denkbar, dass sich in der Axialrichtung parallel zu der Drehachse der Rotor und/oder der Stator mit 1 m und weniger erstrecken und insofern auch der Luftspalt zwischen dem Rotor und Stator in der Axialrichtung eine Erstreckung von 1 m oder weniger aufweist.

Um mit dem Generator eine möglichst hohe Leistung zu erzielen ist ein schmaler Luftspalt gewünscht. Mit schmaler werdenden Luftspalt wird es allerdings zunehmend schwieriger Luft zwischen dem Stator und dem Rotor zur Kühlung des Generators zu verteilen. Denn wird der Luftspalt schmaler steigt der Strömungswiderstand zwischen dem Rotor und dem Stator an. Deshalb ist es bekannt, die Luft mit einem hohen Druck in den Luftspalt zwischen dem Rotor und dem Stator hinein zu fördern bzw. mit einem hohen Unterdruck aus dem Luftspalt zwischen dem Rotor und dem Stator heraus zu fördern. Hierzu sind allerdings große Ventilatoren oder dergleichen erforderlich, um den gewünschten Luftstrom zur Kühlung zu erzeugen. Dies ist zum einen kosten- und wartungsintensiv und läuft zum anderen einer kompakten Bauweise eines Generators entgegen. Insbesondere bei permanenterregten Generatoren ist eine Kühlung wesentlich, um den Betriebszustand des Generators bzw. der Windenergieanlage aufrecht zu erhalten und eine Beschädigung von Spulen zu verhindern. Denn steigt die Temperatur innerhalb des Generators über eine bestimmte Temperatur nimmt die Leistungsfähigkeit des Generators ab und führt, im ungünstigsten Fall, zu einer irreversiblen (Teil)Entmagnetisierung der Permanentmagnete, d.h. der Wirkungsgrad des Generators wird irreversibel, also auf Dauer, minimiert sein. Insbesondere wenn der Luftspalt sich in der Axialrichtung über eine große Breite erstreckt, wird eine gleichmäßige Kühlung des Stators und des Rotors in der Axialrichtung schwierig bis unmöglich. Vielmehr nimmt die Kühlwirkung in der Axialrichtung ab.

Es ist deshalb eine Aufgabe der vorliegenden Erfindung, einen Generator einer Windenergieanlage, ein Statorsegment, einen Stator, ein Rotorsegment, einen Rotor, eine Windenergieanlage sowie ein Verfahren zur Kühlung eines Generators bereitzustellen, die einen oder mehrere der genannten Nachteile beseitigen oder vermindern. Insbesondere ist es eine Aufgabe der vorliegenden Erfindung, eine Lösung bereitzustellen, die einen leistungsfähigeren Generator bzw. eine leistungsfähigere Windenergieanlage mit einer kostengünstigeren Kühlung ermöglicht.

Gemäß einem ersten Aspekt wird die Aufgabe durch einen Generator für eine Windenergieanlage nach Anspruch 1 gelöst.

Sofern nicht ausdrücklich abweichend ausgeführt, sind Angaben zu der Axialrichtung, der Umfangsrichtung und der Radialrichtung in der Beschreibung in Bezug auf die Drehachse des Generators zu verstehen. Die Axialrichtung entspricht einer Richtung parallel, d.h. entlang der Drehachse. Die Umfangsrichtung entspricht einer Richtung im Wesentlichen tangential bzw. parallel zu der Drehachse. Die Radialrichtung entspricht einer Richtung radial zu der Drehachse.

Der Generator ist vorzugsweise als segmentierter Generator ausgebildet. Es kann aber auch bevorzugt sein, dass der Generator als nicht-segmentierter Generator ausgebildet ist. Insbesondere umfasst ein als nicht-segmentierter Generator ausgebildeter Generator ein einziges Generatorsegment, insbesondere ein einziges Rotorsegment und ein einziges Statorsegment, welches sich jeweils in der Umfangsrichtung um 360° Grad erstreckt.

Der segmentierte Generator für eine Windenergieanlage umfasst zwei oder mehrere Generatorsegmente. Die zwei oder mehr Generatorsegmente sind bevorzugt ringförmig angeordnet. Insbesondere sind die zwei oder mehr Generatorsegmente koaxial zu einer Drehachse des segmentierten Generators angeordnet. Insbesondere umfasst der segmentierte Generator einen segmentierten Rotor und einen segmentierten Stator. Der segmentierte Rotor umfasst zwei oder mehrere Rotorsegmente. Der segmentierte Stator umfasst zwei oder mehrere Statorsegmente.

Das jeweilige Generatorsegment bzw. das jeweilige Rotorsegment und/oder das jeweilige Statorsegment sind bezogen auf die Drehachse in einer Umfangsrichtung vorzugsweise teilringförmig ausgebildet. Insbesondere weisen das Generatorsegment bzw. das Rotorsegment und/oder das Statorsegment eine teilringförmige Geometrie auf. Ein Generatorsegment bzw. ein Rotorsegment und/oder ein Statorsegment, welches entsprechend teilringförmig ausgebildet ist oder eine teilringförmige Geometrie aufweist, erstreckt sich in der Umfangsrichtung mit einem bestimmten Bogengrad zwischen einer ersten und zweiten Trennschnittstelle.

Vorzugsweise erstrecken sich die zwei oder mehr Generatorsegmente bzw. die zwei oder mehr Rotorsegmente und/oder zwei oder mehr Statorsegmente mit demselben Bogengrad in der Umfangsrichtung. Insbesondere erstrecken sich die Generatorsegmente bzw. die Rotor- und/oder Statorsegmente in Abhängigkeit der Anzahl der jeweiligen Segmente nach folgender Formel: 360°/(Anzahl der Segmente). Hiernach erstrecken sich beispielsweise die Generatorsegmente eines segmentierten Generators, der zwei Generatorsegmente umfasst, in Umfangsrichtung jeweils um 180°, bei drei Generatorsegmenten wären es 120°, bei vier Generatorsegmenten wären es 90° usw. Dies kann entsprechend für die Rotorsegmente und/oder Statorsegmente gelten.

Es kann auch bevorzugt sein, dass die Generatorsegmente aus denen ein segmentierter Generator zusammengesetzt wird, sich in der Umfangsrichtung mit einem unterschiedlichen Bogengrad erstrecken. Beispielsweise kann ein segmentierter Generator aus drei Generatorsegmenten gebildet sein. Bei einem solchen segmentierten Generator kann sich beispielsweise ein erstes Generatorsegment in der Umfangsrichtung mit 180°, ein zweites Generatorsegment mit 120° und ein drittes Generatorsegment mit 60° erstrecken. Beliebig andere Erstreckungen in der Umfangsrichtung der Generatorsegmente sind denkbar, sofern sie zusammengesetzt in der Umfangsrichtung eine Erstreckung von 360° ergeben. Die Ausführungen zu dem Generatorsegment können entsprechend für ein Rotorsegment eines segmentierten Rotors und/oder ein Statorsegment eines segmentierten Stators gelten.

Die erste und zweite Trennschnittstelle erstrecken sich im Wesentlichen orthogonal zu der Umfangsrichtung. Insbesondere definieren die erste und zweite Trennschnittstelle eine erste und zweite Trennschnittstellenebene, innerhalb derer sich die Drehachse erstreckt. Insbesondere erstrecken sich die erste und/oder zweite Trennschnittstelle derart, dass die erste und/oder zweite Trennschnittstellenebene sich in Bezug zu der Drehachse in einer Radialrichtung erstrecken. Insbesondere schneiden sich die erste und/oder zweite Trennschnittstellenebene, die sich in Bezug zu der Drehachse in der Radialrichtung erstrecken, in einer Achse, die die Drehachse ist oder definiert. Insbesondere liegt die Drehachse in der ersten und/oder zweiten Trennschnittstellenebene, die sich in Bezug zu der Drehachse in der Radialrichtung erstrecken.

Die erste und/oder zweite Trennschnittstelle eines Generatorsegments weist eine Verbindungsvorrichtung auf. Die Verbindungsvorrichtung an der ersten und/oder zweiten Trennschnittstelle ist dazu ausgebildet, benachbarte Generatorsegmente, die zu einem segmentierten Generator angeordnet sind, miteinander zu verbinden. Die Verbindungsvorrichtung der ersten und/oder zweiten Trennschnittstelle ist insbesondere dazu ausgebildet, benachbarte Generatorsegmente mechanisch zu verbinden. Die mechanische Verbindung kann als kraftschlüssige und/oder stoffschlüssige und/oder formschlüssige Verbindung ausgebildet sein. Bevorzugt weisen die erste und/oder zweite Trennschnittstelle einen Flanschanschluss und/oder eine Schraubverbindung als Verbindungsvorrichtung auf zur Befestigung in der Umfangsrichtung benachbarter Generatorsegmente. Die Ausführungen zu dem Generatorsegment können entsprechend für ein Rotorsegment eines segmentierten Rotors und/oder ein Statorsegment eines segmentierten Stators gelten.

Insbesondere kann bevorzugt sein, dass das Rotorsegment, insbesondere dessen Magnetträgersegment, sich in der Umfangsrichtung zwischen der ersten und zweiten Trennschnittstelle mit einer Segmentlänge erstreckt, wobei das Rotorsegment bzw. das Magnetträgersegment eine Außenumfangsfläche aufweist mit einem ersten Trennschnittstellenabschnitt mit einer ersten Länge ausgehend von der ersten Trennschnittstelle in der Umfangsrichtung in Richtung der zweiten Trennschnittstelle; und einem zweiten Trennschnittstellenabschnitt mit einer zweiten Länge ausgehend von der zweiten Trennschnittstelle in der Umfangsrichtung in Richtung der ersten Trennschnittstelle; und einem Verbindungsabschnitt mit einer dritten Länge, die sich zwischen der ersten und zweiten Trennschnittstelle erstreckt; wobei im Bereich des ersten und zweiten Trennschnittstellenabschnitts an der Rotorumfangsfläche jeweils eine Versteifungsvorrichtung zur Versteifung des Magnetträgersegments angeordnet ist. Ergänzend oder alternativ kann bevorzugt sein, dass das Rotorsegment ein Versteifungsringsegment und/oder eine Versteifungsscheibe aufweist.

Ergänzend oder alternativ ist ferner bevorzugt, dass der segmentierte Generator als permanenterregter segmentierter Generator ausgebildet ist. In dieser bevorzugten Ausführung ist vorgesehen, dass an dem Rotor ein oder mehrere Permanentmagnete angeordnet sind. Ein Permanentmagnet, auch Dauermagnet genannt, ist ein Magnet, der ein gleichbleibendes Magnetfeld aufweist, welches nicht-wie bei Elektromagneten - durch eine elektrische Leistung erzeugt wird. Der Permanentmagnet besteht aus einem magnetisierten Material.

Beispiele magnetisierter Materialien eines Permanentmagneten sind Legierungen aus Eisen, Cobalt, Nickel etc.

Vorzugsweise ist der segmentierte Generator als Außenläufer ausgebildet. Bei einem als Außenläufer ausgebildeten segmentierten Generator befindet sich der Stator bzw. segmentierte Stator gegenüber dem Rotor bzw. segmentierten Rotor in Bezug zu der Drehachse in der Radialrichtung innenliegend. Üblicherweise umschließt bei einem als Außenläufer ausgebildeten segmentierten Generator dessen radial außenliegender segmentierter Rotor den radial innenliegenden segmentierten Stator.

In dem Betriebszustand der Windenergieanlage ist der segmentierte Generator insbesondere an einer Lagereinheit befestigt. Die Lagereinheit weist einen feststehenden Lagerteil und einen drehenden bzw. drehbaren Lagerteil auf. Das drehbare Lagerteil ist gegenüber dem feststehenden Lagerteil um die Drehachse mittels Lagerelementen, beispielsweise Kugellagern, Wälzlagern, Tonnenlagern oder dergleichen drehbar gelagert. An dem feststehenden Lagerteil ist in dem Betriebszustand der segmentierte Stator befestigt. An dem drehbaren Lagerteil ist in dem Betriebszustand der segmentierte Rotor befestigt. Zur Befestigung des Stators weist die Lagereinheit an dem feststehenden Lagerteil vorzugsweise einen Stator-Grundkörperflansch auf. Zur Befestigung des Rotors weist die Lagereinheit an dem drehbaren Lagerteil vorzugsweise einen Rotor-Grundkörperflansch auf. Es ist zu verstehen, dass die Flanschfläche des Stator-Grundkörperflansches und des Rotor-Grundkörperflansches zueinander insbesondere mit dem Axialabstand beabstandet zueinander angeordnet sind.

Mit der segmentierten Bauweise des Generators lassen sich transportbedingte Größenbeschränkungen eines Generators überwinden. Insbesondere können segmentierte Generatoren, durch den vereinzelten Transport der Generatorsegmente, auch zu schwierig zugänglichen Aufstellorten von Windenergieanlagen transportiert und auf dem Turm der Windenergieanlagen an der Gondel montiert werden. Insbesondere sind für die Montage eines segmentierten Generators keine großen und teuren Spezialkräne erforderlich. Vielmehr lassen sich die Generatorsegmente einzeln an der Gondel bzw. dem Maschinenträger mit einem kleinen Kran positionieren, der lediglich die Masse eines einzelnen Generatorsegments tragen sowie die Montagehöhe erreichen muss. Hierdurch lassen sich Kosten einsparen, die ansonsten für die wesentlich teureren großen Kräne anfallen. Ferner sind solch großen Kräne in der Regel nur beschränkt verfügbar, so dass man durch den segmentierten Generator hinsichtlich der Montagezeit und auch dem Montageort an Flexibilität gewinnt.

Der Rotor und der Stator sind in der Radialrichtung mit einem Luftspalt zueinander beabstandet angeordnet. Insbesondere erstreckt sich der Luftspalt zwischen einer Rotor-Innenumfangsfläche und einer Stator-Außenumfangsfläche. Insbesondere bildet eine Magneteinheit des Rotors die Rotor-Innenumfangsfläche und ein Stator-Blechpaket und/oder daran angeordnete Spuleneinheiten eine Stator-Außenumfangsfläche.

Der Luftspalt erstreckt sich in der Axialrichtung mit einer Luftspaltbreite und in der Umfangsrichtung mit einer Luftspaltlänge. Insbesondere erstreckt sich der Luftspalt in der Axialrichtung über eine Breite des Stators und/oder des Rotors. Insbesondere erstreckt sich der Luftspalt in der Axialrichtung über die Breite der Aktivteile des Stators und/oder des Rotors. Die Aktivteile des Rotors umfassen insbesondere die an einem Rotor-Blechpaket und/oder einem Magnetträgersegment befestigte Magneteinheiten. Die Aktivteile des Stators umfassen vorzugsweise die an einem Stator-Blechpaket angeordneten Spuleneinheiten.

In der Radialrichtung weist der Luftspalt eine Höhe von mindestens 5 mm, 10 mm, 15 mm oder 20 mm und/oder maximal von 50 mm, 40 mm, 30 mm, 20 mm, 10 mm oder 5 mm auf. Insbesondere beträgt die Höhe des Luftspalts im Wesentlichen 12 mm. In der Axialrichtung weist der Luftspalt eine Breite von mindestens 100 mm, 200 mm, 300 mm, 400 mm, 500 mm, 600 mm, 700 mm, 800 mm, 900 mm, 1000 mm, 1200 mm, 1400 mm und mehr und/oder maximal 2000 mm, 1800 mm, 1600 mm, 1400 mm, 1200 mm, 1000 mm, 900 mm, 800 mm, 700 mm, 600 mm, 500 mm, 400 mm oder weniger auf.

Für weitere Vorteile, Ausführungsvarianten und Ausführungsdetails des erfindungsgemäßen segmentierten Generators und dessen Fortbildungen wird auch auf die nachfolgende Beschreibung zu den entsprechenden Merkmalen und Fortbildungen des Statorsegments, des Stators, des Rotorsegments, des Rotors und der Windenergieanlage sowie dem Verfahren zur Kühlung eines Generators verwiesen.

Gemäß einem weiteren Aspekt wird die Aufgabe durch ein Statorsegment eines Stators eines Generators für eine Windenergieanlage nach Anspruch 2 gelöst. Das Statorsegment ist insbesondere das Statorsegment eines segmentierten Stators. Bevorzugt ist das Statorsegment das Statorsegment eines segmentierten Generators.

Das Statorsegment umfasst ein Spulenträgersegment und mindestens ein Stator-Blechpaket. Das Spulenträgersegment weist eine ringförmige oder teilringförmige Geometrie und eine Stator-Umfangsstruktur auf. Das Statorsegment erstreckt sich bevorzugt in der Radialrichtung zwischen einem radial innenliegenden Flansch zur Befestigung des Statorsegments an einem Stator-Grundkörperflansch einer Lagereinheit und einem radial außenliegenden Spulenträgersegment. Insbesondere ist das Statorsegment als Schalenstruktur ausgebildet. Vorzugsweise erstreckt sich das Statorsegment pyramidenstumpfförmig von dem Flansch zu dem zu dem radial außenliegenden Spulenträgersegment, wobei der Querschnitt des Statorsegments von dem Flansch zu dem radial außenliegenden Spulenträgersegment zunimmt. Insbesondere bildet das Statorsegment, vorzugsweise integral, einen Stator-Tragabschnitt aus, der sich ausgehend von dem radial innenliegenden Flansch zu dem radial außenliegenden Spulenträgersegment erstreckt.

Ferner weist das mindestens ein Stator-Blechpaket vorzugsweise eine ringförmige oder teilringförmige Geometrie auf. Das mindestens ein Stator-Blechpaket ist zur Aufnahme mindestens einer Spuleneinheit ausgebildet und an der Stator-Umfangsstruktur angeordnet. Das mindestens eine Stator-Blechpaket weist mindestens zwei Stator-Blechstapel auf, wobei jeweils benachbarte Stator-Blechstapel der mindestens zwei Stator-Blechstapel in einer Axialrichtung parallel zueinander beabstandet angeordnet sind und jeweils einen Stator-Kühlungskanal mit einer Stator-Kühlungskanalbreite bilden, durch welchen ein Kühlungsmedium hindurchgeführt werden kann, insbesondere in einer Radialrichtung.

Das Stator-Blechpaket umfasst vorzugsweise mindestens einen Stator-Blechstapel mit zwei oder mehr Blechstapeleinheiten, die in einer Umfangsrichtung beabstandet zueinander angeordnet sind. Die Stator-Blechstapel weisen insbesondere mehrere erste Stator-Blechelemente auf, die in einer Axialrichtung nebeneinander, insbesondere gestapelt, angeordnet sind. Ferner weist der mindestens eine Stator-Blechstapel insbesondere mindestens ein zweites Stator-Blechelement, welches von dem ersten Stator-Blechelement verschieden ist, auf. Das mindestens ein zweite Stator-Blechelement verbindet vorzugsweise benachbarte Blechstapeleinheiten der zwei oder mehr Blechstapeleinheiten miteinander. Das zweite Stator-Blechelement weist in der Umfangsrichtung eine Erstreckung auf, die größer ist als eine Erstreckung des ersten Stator-Blechelements in der Umfangsrichtung.

Das erste und zweite Stator-Blechelement weisen in der Umfangsrichtung einen oder mehrere erste Abschnitte auf, die sich in der Radialrichtung mit einer ersten Höhe erstrecken, und einen oder mehrere zweite Abschnitte auf, die sich in der Radialrichtung mit einer zweiten Höhe erstrecken. Die erste Höhe ist vorzugsweise von der zweiten Höhe verschieden. Insbesondere ist die zweite Höhe kleiner als die erste Höhe. Insbesondere erstreckt sich der erste Abschnitt in der Umfangsrichtung mit einer ersten Länge und der zweite Abschnitt mit einer zweiten Länge. Die erste Länge ist vorzugsweise von der zweiten Länge verschieden. Insbesondere ist die zweite Länge kleiner als die erste Länge. Vorzugsweise bilden in der Umfangsrichtung abwechselnd angeordnete erste und zweite Abschnitte ein erstes und/oder zweites Stator-Blechelement. Insbesondere erstreckt sich ein erster Abschnitt in der Umfangsrichtung zwischen zwei zweiten Abschnitten. Insbesondere erstreckt sich ein erster Abschnitt in der Umfangsrichtung zwischen zwei zweiten Abschnitten. Insbesondere bildet der erste Abschnitt gegenüber dem zweiten Abschnitt in der Radialrichtung einen Vorsprung oder Zapfen aus, der sich radial nach außen ausgehend von der Stator-Innenumfangsfläche erstreckt.

Es ist zu verstehen, dass das erste und zweite Stator-Blechelement derart angeordnet werden, dass die zwei oder mehr Blechstapeleinheiten des mindestens einen Stator-Blechstapels einen oder mehrere erste Abschnitte aufweisen, die sich in der Radialrichtung mit der ersten Höhe und in der Umfangsrichtung mit der ersten Länge erstrecken, und einen oder mehrere zweite Abschnitte aufweisen, die sich in der Radialrichtung mit der zweiten Höhe und in der Umfangsrichtung mit der zweiten Länge erstrecken. Insofern ist auch zu verstehen, dass der mindestens eine Stator-Blechstapel gemäß den zwei oder mehr Blechstapeleinheiten mindestens einen ersten und/oder mindestens einen zweiten Abschnitt aufweisen.

Das mindestens eine Stator-Blechpaket ist zur Aufnahme mindestens einer Spuleneinheit ausgebildet. Insbesondere ist eine Spuleneinheit derart an dem Stator-Blechpaket angeordnet, dass sich ein erster Abschnitt des Stator-Blechpakets in der Radialrichtung innerhalb der Spuleneinheit erstreckt. Vorzugsweise ist die Spuleneinheit derart an dem Stator-Blechpaket angeordnet, dass sich der erste Abschnitt des Stator-Blechpakets in der Radialrichtung durch Spuleneinheit hindurch erstreckt. Insbesondere ist die Spuleneinheit derart an dem Stator-Blechpaket angeordnet, dass sie auf einem, insbesondere auf zwei, zweiten Abschnitt/en des Stator-Blechpakets in der Radialrichtung aufliegt.

Die mindestens zwei Stator-Blechstapel weisen vorzugweise in der Axialrichtung dieselbe Stator-Blechstapelbreite auf. Vorzugsweise ist die Stator-Blechstapelbreite größer als die Stator-Kühlungskanalbreite. Insbesondere entspricht die Stator-Blechstapelbreite mindestens 110 %, 120 %, 150 %, 200 % oder 500 % der Stator-Kühlungskanalbreite. Es kann auch bevorzugt sein, dass die Stator-Blechstapelbreite der Stator-Kühlungskanalbreite entspricht. Ferner kann alternativ bevorzugt sein, dass die Stator-Blechstapelbreite kleiner ist als die Stator-Kühlungskanalbreite. Insbesondere entspricht die Stator-Blechstapelbreite mindestens 50 %, 60 %, 70 %, 80% oder 90 % der Stator-Kühlungskanalbreite. Insbesondere wird zwischen benachbarten Stator-Blechstapeln mindestens ein Abstandselement angeordnet, welches die Stator-Kühlungskanalbreite definiert. Vorzugsweise weist das mindestens ein Abstandselement eine Erstreckung in der Umfangsrichtung und/oder der Radialrichtung eine Erstreckung auf, die kleiner ist als eine Erstreckung des ersten und/oder zweiten Blechelements in der Umfangsrichtung und/oder Radialrichtung. Die Höhe des Stator-Kühlkanals entspricht insbesondere der ersten Höhe des ersten Abschnitts des Stator-Blechpakets. Die Länge des Stator-Kühlkanals entspricht bevorzugt der Länge des Stator-Blechpakets in der Umfangsrichtung. Vorzugsweise umfasst das Stator-Blechpaket mindestens 4, 8, 12, 16, 20, 24, 28, 32 oder mehr Stator-Kühlungskanäle.

Die beabstandete Anordnung der Stator-Blechstapel in der Axialrichtung hat den Vorteil, dass eine Kühlung des Stator-Blechpakets durch das Kühlungsmedium nicht nur an der Stator-Außenumfangsfläche in der Axialrichtung, sondern zusätzlich in der Radialrichtung, quasi innerhalb eines Stator-Blechpakets, bewirkt werden kann. Dies führt in besonders vorteilhafter Weise zu einer verbesserten und gleichmäßigeren Kühlung eines Stator-Blechpakets und insofern eines Statorsegments bzw. Stators eines Generators.

Das erfindungsgemäße Statorsegment und dessen Fortbildungen weisen Merkmale auf, die sie insbesondere dafür geeignet machen für einen erfindungsgemäßen Generator und/oder eine erfindungsgemäße Windenergieanlage und/oder ein erfindungsgemäßes Verfahren sowie den jeweiligen Fortbildungen verwendet zu werden. Für weitere Vorteile, Ausführungsvarianten und Ausführungsdetails des erfindungsgemäßen Statorsegments und dessen Fortbildungen wird auch auf die zuvor erfolgte Beschreibung zu den entsprechenden Merkmalen und Fortbildungen des Generators und die nachfolgende Beschreibung zu den entsprechenden Merkmalen und Fortbildungen der Windenergieanlage und des Verfahrens verwiesen.

In einer bevorzugten Ausführungsform des Statorsegments umfasst das Stator-Blechpaket umfassend eine Stator-Leitvorrichtung zum Umleiten und/oder Aufteilen eines nach innen, insbesondere in der Radialrichtung, in Richtung der Stator-Leitvorrichtung zugeführten Kühlungsmediums über eine Stator-Außenumfangsfläche des mindestens einen Stator-Blechpakets, insbesondere in der Axialrichtung, wobei vorzugsweise die Stator-Leitvorrichtung in der Axialrichtung eine Stator-Leitvorrichtungsbreite aufweist, die größer ist als eine Breite eines Stator-Blechstapels der mindestens zwei Stator-Blechstapel. Vorzugsweise erstreckt sich die Stator-Leitvorrichtung in der Umfangsrichtung mit der Länge des Stator-Blechpakets. Insbesondere weist die Stator-Leitvorrichtung eine Höhe in der Radialrichtung auf, die der ersten Höhe des ersten Abschnitts des Stator-Blechpakets entspricht. Insbesondere bildet die Stator-Leitvorrichtung mit den Stator-Blechpaketen die Stator-Au-ßenumfangsfläche.

Es ist zu verstehen, dass ein Rotor einen Umfangsspalt aufweisen kann, durch welchen dem Stator in der Radialrichtung ein Kühlungsmedium zur Kühlung bereitgestellt wird. Insbesondere ist der Umfangsspalt des Rotors fluchtend zu der Stator-Leitvorrichtung angeordnet, so dass die Stator-Leitvorrichtung das der von dem Umfangsspalt bereitgestellte Kühlungsmedium aufteilt, vorzugsweise in gleichgroße Ströme des Kühlungsmediums aufteilt, und in die Axialrichtung über die Stator-Außenumfangsfläche nach außen umleitet. Ein den Umfangsspalt aufweisendes Rotorsegment ist nachfolgend im Detail im Bezug zu dem Rotorsegment beschrieben. Es ist bevorzugt, dass der Umfangsspalt des Rotorsegments in der Axialrichtung eine Breite aufweist, die kleiner ist als die Stator-Leitvorrichtungsbreite.

Dies hat den Vorteil, dass das Kühlungsmedium dem Stator-Blechpaket in der Axialrichtung nicht nur von außen nach innen, sondern zusätzlich über die Stator-Leitvorrichtung in der Axialrichtung von innen nach außen der Stator-Außenumfangsfläche und insbesondere den Stator-Kühlungskanälen zugeführt werden kann. Insbesondere kann das in der Axialrichtung mittig bereitgestellte Kühlungsmedium nach außen hin zur Kühlung bereitgestellt werden. Dies verbessert eine gleichmäßige Kühlung des Generators. Ferner kann das Kühlungsmedium für eine gleiche Kühlleistung mit einer geringeren Leistung gefördert werden.

Gemäß einer ferner bevorzugten Fortbildung ist vorgesehen, dass das Spulenträgersegment eine erste und zweite Trägerplatte aufweist, zwischen denen sich das Spulenträgersegment in der Axialrichtung mit einer Spulenträgersegmentbreite erstreckt, und das Stator-Blechpaket ein erstes und zweites Druckblech aufweist, zwischen denen sich das Stator-Blechpaket mit einer Stator-Blechpaketbreite erstreckt, die insbesondere größer ist als die Spulenträgersegmentbreite; wobei vorzugsweise zwischen der ersten Trägerplatte und der zweiten Trägerplatte mindestens zwei benachbarte Stator-Blechstapel der mindestens zwei Stator-Blechstapel in der Axialrichtung parallel zueinander beabstandet angeordnet sind und jeweils einen Stator-Kühlungskanal bilden, durch welchen das Kühlungsmedium, insbesondere in der Radialrichtung, hindurchgeführt werden kann, insbesondere von einer radial außenliegenden Stator-Außenumfangsfläche in Richtung einer in Bezug zu der Stator-Außenumfangsfläche radial innenliegenden Stator-Innenumfangsfläche; und/oder zwischen der ersten Trägerplatte und dem ersten Druckblech und/oder zwischen der zweiten Trägerplatte und dem zweiten Druckblech mindestens zwei benachbarte Stator-Blechstapel der mindestens zwei Stator-Blechstapel in der Axialrichtung parallel zueinander beabstandet angeordnet sind und jeweils einen Stator-Kühlungskanal bilden, durch welchen das Kühlungsmedium, insbesondere in der Radialrichtung, hindurchgeführt werden kann, insbesondere von einer radial innenliegenden Stator-Innenumfangsfläche in Richtung einer in Bezug zu der Stator-Innenumfangsfläche radial außenliegenden Stator-Außenumfangsfläche; und/oder die Stator-Leitvorrichtung zwischen zwei Stator-Blechstapeln der mindestens zwei Stator-Blechstapel in der Axialrichtung beabstandet angeordnet ist, insbesondere jeweils mit der Stator-Kühlungskanalbreite beabstandet angeordnet ist; und/oder zwischen dem ersten und zweiten Druckblech, insbesondere mittig, angeordnet ist.

Vorzugsweise ist das Stator-Blechpaket in der Axialrichtung mit der Stator-Blechpaketbreite breiter als die Spulenträgersegmentbreite des Spulenträgersegments. Insbesondere ist das Stator-Blechpaket im Vergleich zu dem Spulenträgersegment derart breiter, dass zwischen der ersten Trägerplatte und dem ersten Druckblech des Stator-Blechpakets und/oder der zweiten Trägerplatte und dem zweiten Druckblech des Stator-Blechpakets mehrere benachbarte Stator-Blechstapel angeordnet sind, die mehrere Kühlungskanäle bilden. Vorzugsweise sind zwischen der ersten Trägerplatte und dem ersten Druckblech des Stator-Blechpakets und/oder der zweiten Trägerplatte und dem zweiten Druckblech des Stator-Blechpakets mindestens zwei, drei, vier, fünf, sechs, sieben, acht, neun, zehn oder mehr Stator-Kühlungskanäle angeordnet. Vorzugsweise sind zwischen der ersten und zweiten Trägerplatte mehr Stator-Kühlungskanäle angeordnet als zwischen dem ersten Druckblech des Statorsegments und der ersten Trägerplatte und/oder dem zweiten Druckblech des Statorsegments und der zweiten Trägerplatte.

Insbesondere strömt ein Kühlungsmedium durch die zwischen der ersten Druckplatte und der ersten Trägerplatte und/oder der zweiten Druckplatte und der zweiten Trägerplatte angeordneten Stator-Kühlungskanäle in der Radialrichtung ausgehend von der Stator-Innenumfangsfläche in Richtung der Stator-Außenumfangsfläche und die von der Stator-Außenumfangsfläche in Richtung der Stator-Innenumfangsfläche durch die zwischen der ersten und der zweiten Trägerplatte angeordneten Stator-Kühlungskanäle.

In dieser bevorzugten Ausführungsform wird die Kühlung des Generators verbessert. Insbesondere ermöglicht dies Anordnung der Kühlungskanäle, dass das Kühlungsmedium zwischen der ersten Trägerplatte und dem ersten Druckblech und/oder der zweiten Trägerplatte und dem zweiten Druckblech in der Radialrichtung von innen nach außen durch den mindestens einen Kühlungskanal durch das Stator-Blechpaket hindurchgeführt werden können. Insbesondere kann das Kühlungsmedium in der Radialrichtung durch Kühlungskanäle dem Luftspalt von dem Rotor und dem Stator gebildeten Luftspalt zur Kühlung des Generators zugeführt werden. Dies führt zu einer gleichmäßigeren Kühlung, steigert den Wirkungsgrad des Generators und reduziert die erforderliche Leistung, um einen Strom des Kühlungsmediums zu erzeugen.

Insbesondere ist die Stator-Leitvorrichtung in der Axialrichtung mittig des Stators bzw. Stator-Blechpakets angeordnet. Vorzugsweise ist die Stator-Leitvorrichtung in der Axialrichtung mittig zwischen dem ersten und zweiten Druckblech des Stator-Blechpakets, insbesondere mittig zwischen der ersten und zweiten Trägerplatte des Stator-Trägersegments angeordnet.

Dies bevorzugte Ausführungsform ermöglicht eine symmetrische Aufteilung des in der Radialrichtung in Richtung der Stator-Außenumfangsfläche mittig zugeführten Kühlungsmediums in eine Axialrichtung sowohl in Richtung des ersten als auch des zweiten Druckblechs des Stator-Blechpakets. Dies führt zu einer besonders gleichmäßigen Kühlung des Stator-Blechpakets bzw. des Statorsegments und insbesondere des Generators.

Ferner ist gemäß einer bevorzugten Ausführungsform sind mehrere Stator-Blechstapel der mindestens zwei Stator-Blechstapel zwischen dem ersten und/oder zweiten Druckblech, insbesondere zwischen der Stator-Leitvorrichtung und dem ersten und/oder zweiten Druckblech, äquidistant angeordnet.

Die äquidistante Anordnung der mehreren Stator-Blechstapel bedingt insbesondere Kühlungskanäle mit identischer Breite in der Axialrichtung. Dies fördert in besonderem Maße die gleichmäßige Verteilung des Kühlungsmediums und insofern eine gleichmäßige Kühlung des Stator-Blechpakets bzw. des Statorsegments und insbesondere des Generators.

Ferner hat dies den Vorteil, dass ein Stator-Blechpaket mit äquidistant zueinander beabstandeten Blechstapeln sich kostengünstig herstellen und warten lassen. Ferner minimiert dies die Gefahr, dass bei der Herstellung und auch der Wartung durch Verwechselung von Abständen Fehlteile hergestellt werden.

Gemäß einer weiteren bevorzugten Ausführungsform umfasst das Statorsegment mindestens eine Spuleneinheit, die an dem mindestens einen Stator-Blechpaket angeordnet ist, wobei vorzugsweise die mindestens eine Spuleneinheit aus dem Material Kupfer besteht oder dieses umfasst; und/oderwobei in der Umfangsrichtung benachbarte Spuleneinheiten der mindestens einen Spuleneinheit mit einem Spulenabstandsspalt, insbesondere äquidistant, zueinander angeordnet sind; wobei vorzugsweise der Spulenabstandsspalt zwischen zwei benachbarten Spuleneinheiten der mindestens einen Spuleneinheit als Kühlungsmediumskanal ausgebildet ist, durch welchen das Kühlungsmedium hindurchgeführt werden kann, insbesondere in der Radialrichtung; und/oder in dem Spulenabstandsspalt zwischen zwei benachbarten Spuleneinheiten der mindestens einen Spuleneinheit ein Isolierelement angeordnet ist, welches vorzugsweise eine Spuleneinheit der mindestens einen Spuleneinheit gegenüber einer benachbart angeordneten Spuleneinheit der mindestens einen Spuleneinheit elektrisch isoliert.

Vorzugsweis ist die mindestens eine Spuleneinheit eine Kupferspule. Alternativ kann auch bevorzugt denkbar sein, dass die mindestens eine Spuleneinheit aus dem Material Aluminium besteht oder dieses umfasst. Insbesondere ist die mindestens eine Spuleneinheit eine Aluminiumspule. Prinzipiell ist bevorzugt, dass die mindestens eine Spuleneinheit aus einem leitfähigen Material besteht oder dieses umfasst. Es kann auch bevorzugt sein, dass die mindestens eine Spuleneinheit aus einer Legierung aus Kupfer und/oder Aluminium besteht oder diese umfasst.

Eine gemäß dieser Ausführungsform ausgebildete Spuleneinheit hat den Vorteil, dass diese eine besonders hohe Leistungsdichte ermöglicht. Insofern lassen sich bei einer kompakteren Bauweise im Vergleich zu anderen Materialien eine wesentlich höhere Leistungsdichte realisieren.

Vorzugsweise sind an einem Stator-Blechpaket benachbarte Spuleneinheiten in der Umfangsrichtung mit einem Spulenabstandsspalt beabstandet angeordnet. Der Spulenabstandsspalt ist in der Axialrichtung und/oder der Radialrichtung vorzugsweise konstant. Es kann bevorzugt sein, dass der Spulenabstandsspalt in der Radialrichtung abnimmt. Insbesondere kann der Spulenabstandsspalt in der Radialrichtung von der Stator-Außenumfangsfläche in Richtung der Stator-Innenumfangsfläche abnehmen oder umgekehrt. Insbesondere kann der Spulenabstandsspalt in der Radialrichtung linear und/oder konvex und/oder konkav variieren.

Es ist bevorzugt, dass benachbarte Spuleneinheiten bei mehreren Spuleneinheiten äquidistant angeordnet sind, d.h. jeweils benachbarte Spuleneinheiten mit demselben Spulenabstandsspalt zueinander angeordnet sind. Ferner hat dies den Vorteil, dass sich solche Statorsegmente besonders kostengünstig herstellen und warten lassen.

Insbesondere ist bevorzugt, dass der Spulenabstandsspalt zwischen zwei benachbarten Spuleneinheiten als Kühlungsmediumskanal ausgebildet, welcher ermöglicht, dass ein Kühlungsmedium in der Radialrichtung von der Stator-Außenumfangsfläche in Richtung der Stator-Innenumfangsfläche und/oder umgekehrt strömt. Insbesondere ermöglicht der Kühlungsmediumskanal, dass das Kühlungsmedium in der Radialrichtung durch das Stator-Blechpaket hindurch strömen kann.

Der als Kühlungsmediumskanal ausgebildete Spulenabstandsspalt vergrößert in besonders vorteilhafter Weise einen Querschnitt des Stator-Blechpakets, durch welchen das Kühlungsmedium zur Kühlung des Generators, insbesondere des Stator-Segments bzw. des Stator-Blechpakets, hindurchströmen kann. Dies führt insbesondere zu einem besser gekühlten Generator, was insofern den Wirkungsgrad des Generators in vorteilhafter Weise erhöht. Ferner hat dies den Vorteil, dass das Kühlungsmedium neben der Kühlung auch benachbarte Spuleneinheiten elektrisch voneinander isolieren kann.

Es kann bevorzugt sein, dass in einem oder in mehreren Spulenabstandsspalten zwischen zwei benachbarten Spuleneinheiten ein Isolierelement angeordnet ist. Es kann insbesondere bevorzugt sein, dass zwischen jeder benachbarten Spuleneinheit im jeweiligen Spulenabstandsspalt ein Isolierelement angeordnet ist. Das Isolierelement ist beispielsweise ein Polymer oder weist ein sonstiges elektrisch isolierendes Material auf. Ein solches Isolierelement isoliert benachbarte Spuleneinheiten voneinander.

Nach einer ferner bevorzugten Fortbildung umfasst das Statorsegment eine Kühlvorrichtung und/oder eine Kühlungsmediumleitvorrichtung, die, insbesondere in der Axialrichtung, zwischen der ersten und zweiten Trägerplatte angeordnet ist und das Kühlungsmedium durch die zwischen der ersten und zweiten Trägerplatte angeordneten Startor-Kühlungskanäle nach innen fördert, insbesondere von der radial außenliegenden Stator-Außenumfangsfläche in Richtung der radial innenliegenden Stator-Innenumfangsfläche; die Kühlvorrichtung vorzugsweise umfassend: eine Kühlungsmediumfördereinheit, vorzugsweise eine Lüftereinheit, insbesondere einen Ventilator, zum Erzeugen eines Stroms des Kühlungsmediums; und/oder eine Wärmetauschereinheit zum Abkühlen des erwärmten Kühlungsmediums, wobei vorzugsweise die Wärmetauschereinheit in der Radialrichtung zwischen der Lüftereinheit und dem Spulenträgersegment angeordnet ist, und vorzugsweise die Wärmetauschereinheit eine Fluid-Luft-Wärmetauschereinheit oder Luft-Luft-Wärmetauschereinheit ist; und/oder Kühlungsmediumleitvorrichtung vorzugsweise umfassend: eine oder mehrere Kühlungsmediumleitungen; und/oder ein oder mehrere Kühlungsmediumleitelemente.

Der Strom des Kühlungsmediums ist insbesondere als Volumenstrom, Massestrom und/oder als Durchfluss des Kühlungsmediums zu verstehen.

Ferner ist die Kühlvorrichtung insbesondere dazu ausgebildet, das Kühlungsmedium durch die zwischen der ersten Druckplatte des Stator-Blechpakets und der ersten Trägerplatte und/oder zwischen der zweiten Druckplatte des Stator-Blechpakets und der zweiten Trägerplatte angeordneten Stator-Kühlungskanäle in der Radialrichtung von innen nach außen zu fördern.

Bei einem Statorsegment aufweisend eine Kühlmediumleitvorrichtung ist eine Kühlungsmediumfördereinheit, beispielsweise wie zuvor beschrieben, vorzugsweise außerhalb des Generators angeordnet. Beispielsweise ist die Kühlungsmediumfördereinheit in einer Gondel der Windenergieanlage angeordnet. In dieser bevorzugten Ausführung fördert die Kühlungsmediumfördereinheit das in dem Generator befindliche Kühlungsmedium, insbesondere Luft, aus dem Generator durch den Luftspalt und die zuvor beschriebenen Stator-Kühlungskanäle beispielsweise in die Umgebung der Gondel. Ferner kann eine weitere oder dieselbe Kühlungsmediumfördereinheit Luft als Kühlungsmedium aus der Umgebung der Gondel ansaugen und innerhalb des Generators zur Kühlung des Stators bzw. des Statorsegments und des Rotors bzw. Rotorsegments, wie zuvor beschrieben, bereitstellen. Es ist zu verstehen, dass aus der Umgebung angesaugte Luft beispielsweise durch einen Wasserabscheider und/oder einen Luftfilter geführt wird, bevor es innerhalb des Generators zur Kühlung des Stators und/oder Rotors bereitgestellt wird.

Gemäß einem weiteren Aspekt wird die Aufgabe durch einen Stator eines Generators für eine Windenergieanlage nach Anspruch 8 gelöst.

Der Stator ist insbesondere ein segmentierter Stator. Vorzugsweise ist der Stator ein Stator eines segmentierten Generators. Der Stator umfasst ein ringförmig ausgebildetes Statorsegment oder mehrere teilringförmig ausgebildete Statorsegmente, die ringförmig angeordnet sind. Ein solcher Stator umfasst ein erfindungsgemäßes Statorsegment und/oder Merkmale einer der zuvor beschriebenen Ausführungsformen des Statorsegments oder einer Kombination daraus.

Für weitere Vorteile, Ausführungsvarianten und Ausführungsdetails des erfindungsgemäßen Stators und dessen Fortbildungen wird auch auf die vorangehende Beschreibung zu den entsprechenden Merkmalen und Fortbildungen des Generators und des Statorsegments sowie den nachstehenden Beschreibungen des Rotorsegments, des Rotors, der Windenergieanlage und des Verfahrens verwiesen.

Gemäß einem weiteren Aspekt wird die Aufgabe durch ein Rotorsegment eines Generators für eine Windenergieanlage nach Anspruch 9 gelöst.

Das Rotorsegment eines Rotors, insbesondere eines segmentierten Rotors eines segmentierten Generators, für eine Windenergieanlage, umfasst ein Magnetträgersegment mit einer ringförmigen oder teilringförmigen Geometrie und einer Rotor-Innenumfangsfläche, und mehrere Magneteinheiten, die an dem Magnetträgersegment in einer Umfangsrichtung beabstandet zueinander angeordnet sind und die Rotor-Innenumfangsfläche bilden bzw. definieren, dadurch gekennzeichnet, dass in einer Axialrichtung zwei oder mehrere Magneteinheiten der mehreren Magneteinheiten beabstandet zueinander angeordnet sind, wobei die in der Axialrichtung benachbart angeordneten Magneteinheiten einen Umfangsspalt mit einer Spaltbreite zur Zufuhr und zum Verteilen eines Kühlungsmediums definieren.

Das Rotorsegment erstreckt sich bevorzugt in der Radialrichtung zwischen einem radial innenliegenden Flansch zur Befestigung des Rotorsegments an dem Rotor-Grundkörperflansch einer Lagereinheit und dem radial außenliegenden Magnetträgersegment. Vorzugsweise erstreckt sich das Rotorsegment mit einem Rotor-Tragabschnitt zwischen dem radial innenliegenden Flansch zur Befestigung des Rotorsegments an dem Rotor-Grundkörperflansch der Lagereinheit und dem radial außenliegenden Magnetträgersegment. Es ist zu verstehen, dass das Rotorsegment mehrteilig oder integral ausgebildet sein kann. Insbesondere ist zu verstehen, dass das Rotorsegment integral aus einzelnen miteinander verschweißten Rotorsegmenten ausgebildet sein kann.

Der Umfangsspalt des Rotorsegments ist insbesondere dazu ausgebildet, das Kühlungsmedium in der Radialrichtung dem Statorsegment zuzuführen. Insbesondere ist der Umfangsspalt dazu ausgebildet, zwischen dem Rotorsegment und dem mit dem Luftspalt in der Radialrichtung dazu beabstandet angeordneten Statorsegment ein Kühlungsmedium zuzuführen, insbesondere ausgehend von dem Umfangsspalt in der Axialrichtung nach außen. Vorzugsweise ist der Umfangsspalt hierzu bezogen auf die Erstreckung des Rotorsegments in der Axialrichtung mittig angeordnet, insbesondere mittig zwischen den in der Axialrichtung beabstandet angeordneten Magneteinheiten.

Der Umfangsspalt ist in der Axialrichtung vorzugsweise fluchtend zu der Stator-Leitvorrichtung angeordnet. Insbesondere ist der Umfangsspalt gegenüber der Stator-Leitvorrichtung in der Axialrichtung zentriert angeordnet. Vorzugsweise ist die Spaltbreite des Umfangsspalts kleiner als die Stator-Leitvorrichtungsbreite. Vorzugsweise entspricht die Stator-Leitvorrichtungsbreite mindestens 110 %, 120 %, 140 %, 160 %, 180 %, 200 %, 250 %, 300 % oder mehr und maximal 500 %, 400 %, 300 %, 250 %, 200 %, 180 %, 160 %, 140 %, 120 %, 110 % oder weniger.

Dies hat den Vorteil, dass das Kühlungsmedium dem Stator-Blechpaket in der Axialrichtung nicht nur von außen nach innen, sondern zusätzlich über den Umfangsspalt in der Axialrichtung von innen nach außen dem Luftspalt, insbesondere der Stator-Außenumfangsfläche und insbesondere den Stator-Kühlungskanälen sowie der Rotor-Innenumfangsfläche, zur Kühlung zugeführt werden kann. Insbesondere kann das in der Axialrichtung mittig bereitgestellte Kühlungsmedium nach außen hin zur Kühlung bereitgestellt werden. Dies verbessert eine gleichmäßige Kühlung des Generators. Ferner kann das Kühlungsmedium für eine gleiche Kühlleistung mit einer geringeren Leistung gefördert werden.

Das erfindungsgemäße Rotorsegment und dessen Fortbildungen weisen Merkmale auf, die sie insbesondere dafür geeignet machen für einen erfindungsgemäßen Generator und/oder eine erfindungsgemäße Windenergieanlage und/oder ein erfindungsgemäßes Verfahren sowie den jeweiligen Fortbildungen verwendet zu werden. Für weitere Vorteile, Ausführungsvarianten und Ausführungsdetails des erfindungsgemäßen Rotorsegments und dessen Fortbildungen wird auch auf die zuvor erfolgte Beschreibung zu den entsprechenden Merkmalen und Fortbildungen des Generators, des Statorsegments, des Stators und die nachfolgende Beschreibung zu den entsprechenden Merkmalen und Fortbildungen der Windenergieanlage und des Verfahrens verwiesen.

Gemäß einer bevorzugten Ausführungsform des Rotorsegments ist vorgesehen, dass das Magnetträgersegment mindestens ein Rotor-Blechpaket aufweist, das sich in der Axialrichtung zwischen einem ersten und zweiten Druckblech erstreckt und mindestens einen ersten Zufuhrkanal für ein Kühlungsmedium aufweist, der sich zwischen dem ersten und/oder zweiten Druckblech und dem Umfangsspalt, insbesondere innerhalb des Rotor-Blechpakets, erstreckt, um das Kühlungsmedium, welches an dem ersten und/oder zweiten Druckblech durch eine erste Öffnung in den ersten Zufuhrkanal eintreten kann, zu dem Umfangsspalt zu fördern, insbesondere in der Axialrichtung, in welchen es durch eine zweite Öffnung austreten kann; und/oder die mehreren Magneteinheiten in einer Umfangsrichtung äquidistant angeordnet sind; und/oder in der Umfangsrichtung benachbart angeordnete Magneteinheiten einen zweiten Zufuhrkanal für ein Kühlungsmedium definieren, um das Kühlungsmedium ausgehend von dem ersten und/oder zweiten Druckblech in Richtung des Umfangsspalts zu fördern, insbesondere in der Axialrichtung; und/oderdie Magneteinheiten eine, zwei oder mehr Magnetreihen umfassen, die vorzugsweise in der Umfangsrichtung zueinander beabstandet, insbesondere äquidistant, angeordnet sind; und/oder eine Magnetreihe einen oder mehrere Magnetblöcke umfasst, die vorzugsweise in der Axialrichtung nebeneinander angeordnet sind.

Insbesondere ist zu verstehen, dass der erste Zufuhrkanal im Vergleich zu dem zweiten Zufuhrkanal in der Umfangsrichtung versetzt angeordnet ist. Vorzugsweise ist ein erster Zufuhrkanal in der Umfangsrichtung zwischen zwei zweiten Zufuhrkanälen angeordnet, insbesondere mittig zwischen zwei zweiten Zufuhrkanälen angeordnet. Ferner kann bevorzugt sein, dass ein zweiter Zufuhrkanal zwischen zwei ersten Zufuhrkanälen angeordnet ist, insbesondere mittig zwischen zwei ersten Zufuhrkanälen angeordnet ist. Insbesondere ist bevorzugt, dass der mindestens eine erste Zufuhrkanal im Vergleich zu dem mindestens einen zweiten Zufuhrkanal in der Radialrichtung außen angeordnet ist. Ferner ist bevorzugt, dass der mindestens eine erste Zufuhrkanal im Vergleich zu dem mindestens einen zweiten Zufuhrkanal orthogonal zu der Umfangsrichtung einen größeren Kanalquerschnitt aufweist.

Ferner ist bevorzugt, dass der mindestens eine zweite Zufuhrkanal in der Radialrichtung in Richtung der Stator-Außenumfangsfläche offen ist bzw. geöffnet ausgebildet ist. Insbesondere ist zu verstehen, dass die in der Umfangsrichtung benachbart angeordneten Magneteinheiten jeweils einen nutartigen zweiten Zufuhrkanal ausbilden. Insbesondere ist der mindestens eine zweite Zufuhrkanal ausgebildet, in der Axialrichtung ausgehend von dem ersten und/oder zweiten Druckblech des Rotor-Blechpakets das Kühlungsmedium in Richtung des Umfangsspalts bereitzustellen. Es ist insbesondere zu verstehen, dass das in dem mindestens einen zweiten Zufuhrkanal bereitgestellte Kühlungsmedium den Stator-Kühlungskanälen zur Kühlung des Stator-Blechpakets sowie der mindestens einen Spuleneinheit bereitgestellt wird.

Insbesondere ist der mindestens eine erste Zufuhrkanal ausgebildet, in der Axialrichtung ausgehend von dem ersten und/oder zweiten Druckblech des Rotor-Blechpakets das Kühlungsmedium zu dem Umfangsspalt bereitzustellen. Es ist insbesondere zu verstehen, dass das in dem mindestens einen ersten Zufuhrkanal bereitgestellte Kühlungsmedium den Stator-Kühlungskanälen zur Kühlung des Stator-Blechpakets sowie der mindestens einen Spuleneinheit ausgehend von dem Umfangsspalt des Rotorsegments und/oder der Stator-Leitvorrichtung des Statorsegments in Richtung des ersten und/oder zweiten Druckblechs des Stator-Blechpakets bzw. des Rotor-Blechpakets bereitgestellt wird.

Insbesondere ist zu verstehen, dass der Abstand in der Umfangsrichtung zwischen benachbarten Magneteinheiten vorzugsweise größer ist als der Abstand in der Umfangsrichtung zwischen benachbarten Magnetreihen einer Magneteinheit.

Dies hat den Vorteil, dass das Kühlungsmedium dem Stator-Blechpaket in der Axialrichtung nicht nur von außen nach innen über den mindestens einen zweiten Zufuhrkanal, sondern zusätzlich über den mindestens einen Zufuhrkanal dem Umfangsspalt und insofern in der Axialrichtung von innen nach außen dem Luftspalt, insbesondere der Stator-Außenumfangsfläche und insbesondere den Stator-Kühlungskanälen sowie der Rotor-Innenumfangsfläche zur Kühlung zugeführt werden kann. Insbesondere kann das in der Axialrichtung mittig bereitgestellte Kühlungsmedium nach außen hin zur Kühlung bereitgestellt werden. Dies verbessert eine gleichmäßige Kühlung des Generators. Ferner kann das Kühlungsmedium für eine gleiche Kühlleistung mit einer geringeren Leistung gefördert werden.

Gemäß einem weiteren Aspekt wird die Aufgabe durch einen Rotor eines Generators für eine Windenergieanlage nach Anspruch 11 gelöst.

Der Rotor ist insbesondere ein segmentierter Rotor. Vorzugsweise ist der Rotor ein Rotor eines segmentierten Generators. Der Rotor umfasst ein ringförmig ausgebildetes Rotorsegment oder mehrere teilringförmig ausgebildete Rotorsegmente, die ringförmig angeordnet sind. Ein solcher Rotor umfasst ein erfindungsgemäßes Rotorsegment und/oder Merkmale einer der zuvor beschriebenen Ausführungsformen des Rotorsegments oder einer Kombination daraus.

Für weitere Vorteile, Ausführungsvarianten und Ausführungsdetails des erfindungsgemäßen Rotors und dessen Fortbildungen wird auch auf die vorangehende Beschreibung zu den entsprechenden Merkmalen und Fortbildungen des Generators, des Statorsegments, des Stators, des Rotorsegments sowie den nachstehenden Beschreibungen der Windenergieanlage und des Verfahrens verwiesen.

Gemäß einer bevorzugten Fortbildung des Generators definieren der Stator und der Rotor einen Generatorinnenraum, umfassend eine Dichtungsvorrichtung die den Generatorinnenraum gegenüber einer Umgebung im Wesentlichen luftdicht und/oder staubdicht abdichtet, wobei vorzugsweise die Dichtungsvorrichtung eine Labyrinthdichtungseinheit und/oder eine Bürsteneinheit umfasst.

Dies hat den Vorteil, dass der Luftspalt und/oder der Stator-Kühlungskanal und/oder Kühlungsmediumskanal und/oder der Umfangsspalt und/oder der erste und/oder zweite Zufuhrkanal nicht verschmutzen, insbesondere nicht verstopfen oder die Kühlleistung minimiert wird. Ferner minimiert dies die erforderlichen Wartungsintervalle des Generators in vorteilhafter Weise.

Gemäß einem weiteren Aspekt wird die Aufgabe durch eine Windenergieanlage nach Anspruch 13 gelöst.

Für weitere Vorteile, Ausführungsvarianten und Ausführungsdetails der erfindungsgemäßen Windenergieanlage und dessen Fortbildungen wird auch auf die vorangehende Beschreibung zu den entsprechenden Merkmalen und Fortbildungen des Generators, des Statorsegments, des Stators, des Rotorsegments und des Rotors sowie den nachstehenden Beschreibungen des Verfahrens verwiesen.

Gemäß einem weiteren Aspekt wird die Aufgabe durch ein Verfahren zur Kühlung eines Generators nach Anspruch 14 gelöst.

Das Verfahren zur Kühlung des Generators umfasst insbesondere ein Bereitstellen eines Generators wie zuvor gemäß der Erfindung oder dessen Fortbildungen beschrieben. Ferner umfasst das Verfahren ein Erzeugen eines Stroms eines Kühlungsmediums durch den bereitgestellten Generator. Das Verfahren umfasst des Weiteren ein Führen des Kühlungsmediums durch einen Stator-Kühlungskanal eines Stator-Blechpakets eines Statorsegments des bereitgestellten Generators, insbesondere in einer Radialrichtung. Ferner kann das Verfahren umfassen ein Führen des Kühlungsmediums durch einen Umfangsspalt eines Rotorsegments des bereitgestellten Generators, insbesondere zwischen in einer Axialrichtung beabstandet zueinander angeordneten Magneteinheiten. Schließlich kann das Verfahren auch umfassen ein Führen des Kühlungsmediums durch einen Spulenabstandsspalt eines Rotorsegments des bereitgestellten Generators, insbesondere zwischen in einer Umfangsrichtung beabstandet zueinander angeordneten Spuleneinheiten der mindestens einen Spuleneinheit, insbesondere in der Radialrichtung.

Das erfindungsgemäße Verfahren und ihre möglichen Fortbildungen weisen Merkmale bzw. Verfahrensschritte auf, die sie insbesondere dafür geeignet machen für einen erfindungsgemäßen Generator und/oder eine erfindungsgemäße Windenergieanlage und/oder ein erfindungsgemäßes Statorsegment und/oder einen erfindungsgemäßen Stator und/oder ein erfindungsgemäßes Rotorsegment und/oder einen erfindungsgemäßen Rotor sowie die jeweiligen Fortbildungen verwendet zu werden. Für weitere Vorteile, Ausführungsvarianten und Ausführungsdetails des erfindungsgemäßen Verfahrens und dessen Fortbildungen wird auf die vorangehende Beschreibung zu den entsprechenden Merkmalen und Fortbildungen des Generators, des Statorsegments, des Stators, des Rotorsegments, des Rotors und der Windenergieanlage verwiesen.

In einer bevorzugten Ausführungsform des Verfahrens zur Kühlung ist vorgesehen, dass der Schritt des Führens des Kühlungsmediums durch einen Stator-Kühlungskanal insbesondere umfasst ein Führen des Kühlungsmediums durch einen Stator-Kühlungskanal, die in einer Axialrichtung zwischen einer ersten und zweiten Trägerplatte angeordnet sind, von einer radial außenliegenden Stator-Außenumfangsfläche in Richtung einer in Bezug zu der Stator-Außenumfangsfläche innenliegenden Stator-Innenumfangsfläche; und/oder ein Führen des Kühlungsmediums durch einen Stator-Kühlungskanal, die in einer Axialrichtung zwischen einer ersten Trägerplatte und einem ersten Druckblech angeordnet sind und/oder zwischen einer zweiten Trägerplatte und einem zweiten Druckblech angeordnet sind, von einer radial innenliegenden Stator-Innenumfangsfläche in Richtung einer in Bezug zu der Stator-Innenumfangsfläche außenliegenden Stator-Außenumfangsfläche; und/oder der Schritt des Führens des Kühlungsmediums durch einen Umfangsspalt insbesondere ein Zuführen und Verteilen des Kühlungsmediums von dem Umfangsspalt auf dem Stator-Blechpaket, insbesondere über eine Stator-Außenumfangsfläche, umfasst; und/oder das Verfahren ferner vorzugsweise umfasst: ein Umleiten und/oder Aufteilen des von dem Umfangsspalt zugeführten Kühlungsmediums mit einer Stator-Leitvorrichtung über eine Stator-Außenumfangsfläche, insbesondere in einer Axialrichtung; und/oder ein Zuführen des Kühlungsmediums zu dem Umfangsspalt, insbesondere durch einen ersten Zufuhrkanal, der sich ausgehend von einem ersten und/oder zweiten Druckblech eines Magnetträgersegments bis zu dem Umfangsspalt erstreckt; und/oder ein Zuführen des Kühlungsmediums zu der Stator-Außenumfangsfläche in Richtung des Umfangsspalts durch einen zweiten Zufuhrkanal, der sich ausgehend von einem ersten und/oder zweiten Druckblech eines Magnetträgersegments in Richtung des Umfangsspalts erstreckt.

Bevorzugte Ausführungsformen der Erfindung werden beispielhaft anhand der beiliegenden Figuren erläutert. Es zeigen:
- Fig. 1:: eine schematische, dreidimensionale Ansicht einer beispielhaften Ausführungsform einer Windenergieanlage in einem Betriebszustand;
- Fig. 2:: eine schematische, dreidimensionale Schnittansicht einer bevorzugten Ausführungsform eines segmentierten Generators;
- Fig. 3:: eine schematische, dreidimensionale Ansicht einer bevorzugten Ausführungsform eines Statorsegments in einer Umfangsrichtung;
- Fig. 4:: eine schematische, dreidimensionale Ansicht des in Figur 3 dargestellten Statorsegments im Wesentlichen in einer Axialrichtung;
- Fig. 5:: eine schematische, dreidimensionale Detailansicht des in Figur 3 dargestellten Statorsegments;
- Fig. 6:: eine schematische, dreidimensionale Ansicht einer bevorzugten Ausführungsform eines Stator-Blechpakets mit daran angeordneten Spuleneinheiten;
- Fig. 7a,b:: eine schematische, zweidimensionale Schnittansicht eines Stator-Blechpakets mir daran angeordneten Spuleneinheiten in Axialrichtung in zwei verschiedenen bevorzugten Ausführungsformen;
- Fig. 8:: eine schematische, dreidimensionale Gesamtansicht einer bevorzugten Ausführungsform eines Rotorsegments;
- Fig. 9:: eine schematische, dreidimensionale Detailansicht des in Figur 8 dargestellten Rotorsegments;
- Fig. 10:: eine schematische, dreidimensionale Detailansicht eines Generatorsegments mit einem Statorsegment gemäß der in den Figuren 3 und 5 dargestellten bevorzugten Ausführungsform und einem Rotorsegment gemäß der in den Figuren 8 und 9 dargestellten bevorzugten Ausführungsform; und
- Fig. 11:: ein schematisches Ablaufdiagramm, das exemplarisch Schritte einer bevorzugten Ausführungsform eines Verfahrens zur Kühlung eines Generators zeigt.

In den Figuren sind gleiche oder im Wesentlichen funktionsgleiche bzw. -ähnliche Elemente mit den gleichen Bezugszeichen bezeichnet. Sofern in der vorliegenden Figurenbeschreibung allgemein Bezug zu einem Generator, Rotor oder Stator genommen wird ist davon prinzipiell ein segmentierter Generator, segmentierte Rotor oder segmentierter Stator umfasst, sofern dies nicht ausdrücklich anders beschrieben ist.

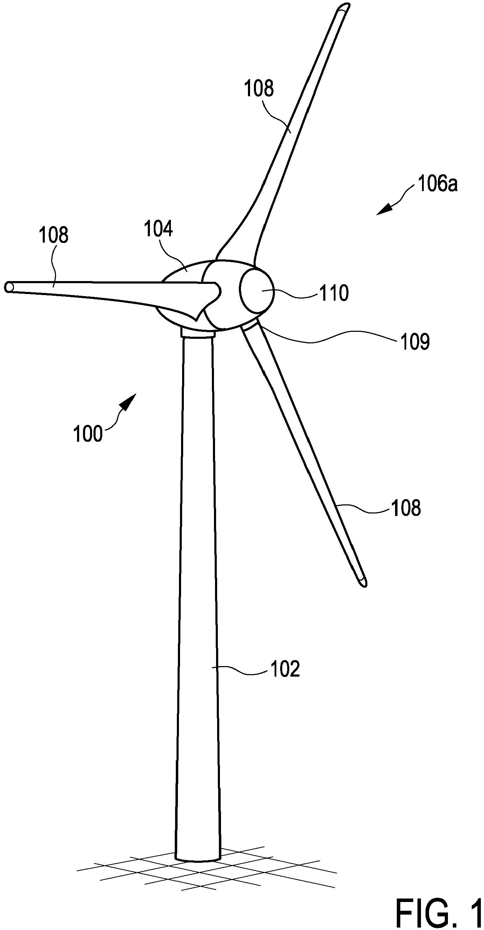

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein aerodynamischer Rotor 106a mit drei Rotorblättern 108 und einem Spinner 110 angeordnet. Der aerodynamische Rotor 106a wird im Betrieb durch den Wind in eine Drehbewegung versetzt und treibt dadurch einen Generator 1, insbesondere einen Rotor 106 des Generators 1, an. Der Generator 1 ist insbesondere außerhalb der Gondel 104 angeordnet. Der Turm 102 weist insbesondere Windenergieanlagen-Stahlturmringsegmente mit Flanschsegmenten auf. Dadurch wird der Turm 102 mittels einfach zu transportierender Bauteile aufgebaut, die darüber hinaus mit hoher Präzision und geringem Aufwand verbunden werden können.

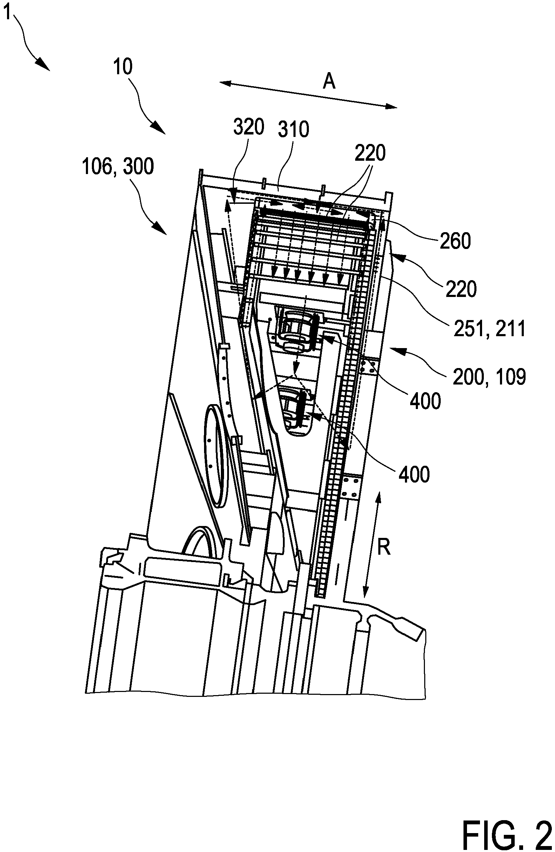

In Figur 2 ist ein Generatorsegment 10 eines segmentierten Generators 1 gezeigt. Der segmentierte Generator 1 umfasst einen segmentierten Rotor 106 und einen segmentierten Stator 109. In der in Figur 2 dargestellten bevorzugten Ausführungsform des segmentierten Generators 1 weist der segmentierte Rotor 106 mehrere Rotorsegmente 300 und der segmentierte Stator 109 mehrere Statorsegmente 200 auf. Insbesondere weist vorliegend das Generatorsegment 10 ein Rotorsegment 300 und ein Statorsegment 200 auf. Die in Figur 2 dargestellte bevorzugte Ausführungsform des segmentierten Generators 1 ist als Außenläufer ausgebildet. Bei einem als Außenläufer ausgebildeten segmentierten Generator 1 ist der Stator 109 innerhalb des Rotors 106 angeordnet. In dieser bevorzugten Ausführung umschließt der Rotor mit einer Rotor-Innenumfangsfläche eine Stator-Außenumfangsfläche des Stators 109 vollständig.

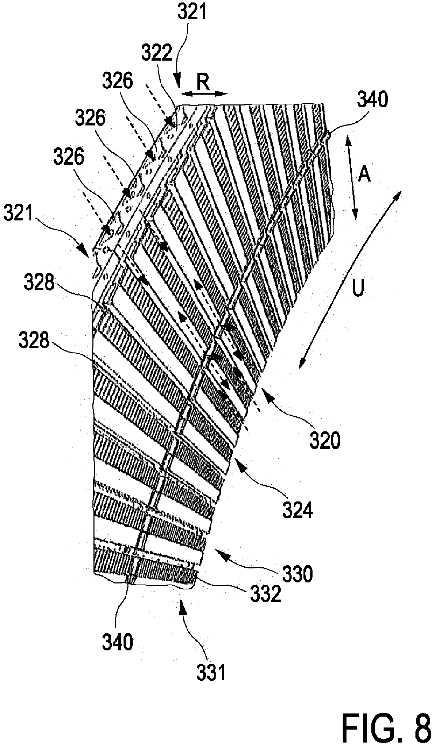

Das in Figur 2 dargestellte Rotorsegment umfasst ein Magnetträgersegment 310 und mehrere Magneteinheiten 330. Das Magnetträgersegment 310 weist eine ringförmige oder teilringförmige Geometrie und eine Rotor-Innenumfangsfläche 320 auf. Die mehreren Magneteinheiten 330 sind an dem Magnetträgersegment 310 in einer Umfangsrichtung U beabstandet zueinander angeordnet und bilden bzw. definieren eine Rotor-Innenumfangsfläche 320. Ferner sind die Magneteinheiten 330 in einer Axialrichtung A beabstandet zueinander angeordnet, so dass die in der Axialrichtung A benachbart angeordneten Magneteinheiten 330 einen Umfangsspalt 340 mit einer Spaltbreite zur Zufuhr und zum Verteilen eines Kühlungsmediums definieren. Diese Anordnung der Magneteinheiten 330 an dem Magnetträgersegment 310 mit dem Umfangsspalt 340 ist im Detail in den Figuren 8 bis 10 für eine bevorzugte Ausführung schematisch gezeigt.

Das in Figur 2 abgebildete Statorsegment umfasst ein Spulenträgersegment und mindestens ein Stator-Blechpaket 220. Das Spulenträgersegment 210 weist eine ringförmige oder teilringförmige Geometrie und eine Stator-Umfangsstruktur211 auf. Das Stator-Blechpaket 220 ist an der Stator-Umfangsstruktur 211 angeordnet. Ferner sind an dem Stator-Blechpaket 220 mehrere Spuleneinheiten 260 angeordnet.

Das Statorsegment weist ferner eine Kühlvorrichtung 400 auf zur Kühlung des Generators 1 mit einem Kühlungsmedium. In der bevorzugten Ausführung ist das Kühlungsmedium Luft. Die Kühlvorrichtung 400 umfasst eine als Ventilator ausgebildete Kühlungsmediumfördereinheit, die einen Strom des Kühlungsmedium innerhalb des Generators 1 erzeugt. Der Strom ist insbesondere als Volumenstrom, Massestrom und/oder als Durchfluss des Kühlungsmediums zu verstehen. Ferner weist die Kühlvorrichtung 400 eine Wärmetauschereinheit auf zum Abkühlen des erwärmten Kühlungsmediums. Die Wärmetauschereinheit ist in der Radialrichtung R zwischen der Lüftereinheit und dem Spulenträgersegment 210 angeordnet.

Alternativ kann auch bevorzugt sein (nicht dargestellt), dass der in Figur 2 gezeigte Generator 1 bzw. dessen Generatorsegmente 10, insbesondere die Statorsegmente, eine Kühlungsmediumleitvorrichtung aufweist, die einen erzeugten Strom des Kühlungsmediums über ein oder mehrere Kühlungsmediumleitungen und/oder ein oder mehrere Kühlungsmediumleitelemente lenken und/oder führen. Insbesondere ist in dieser Alternative bevorzugt, dass die Kühlungsmediumleitvorrichtung den durch den Generator 1, insbesondere durch die Aktivteile, erwärmten Strom des Kühlungsmediums aus dem Generator 1 bzw. den Generatorsegmenten 10 hinaus fördert und aus der Umgebung ein im Vergleich zu dem erwärmten Kühlungsmedium kälteres Kühlungsmedium in den Generator 1 bzw. die Generatorsegmente 10 hinein fördert.

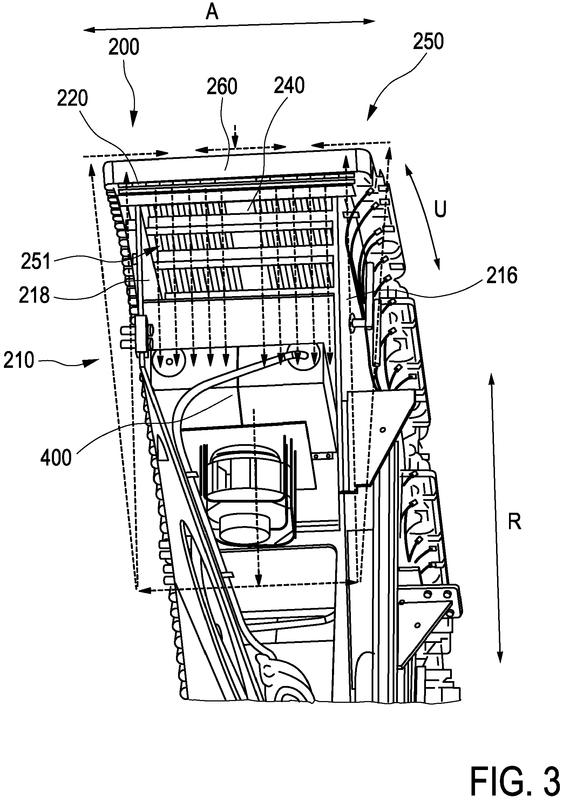

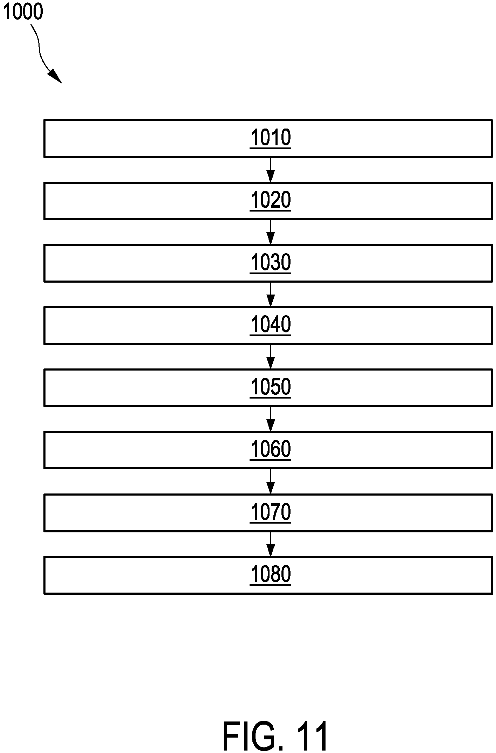

Der innerhalb des Generators erzeugte Strom des Kühlungsmediums - in allen hier beschriebenen bevorzugten Ausführungsformen ist das Kühlungsmedium bevorzugt Luft - ist in Bezug zu Figur 2 sowie auch in Bezug zu den Figuren 3, 5, 6 und 8 bis 10 durch gestrichelte Pfeile dargestellt und in Bezug zu dem in Figur 11 dargestellten Ablaufdiagramm des Verfahrens zur Kühlung eines Generators im Detail beschrieben (siehe unten).

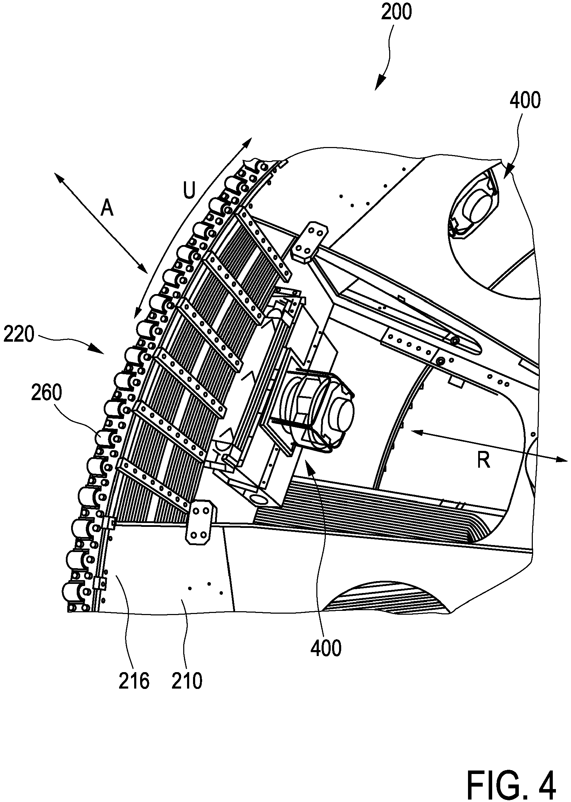

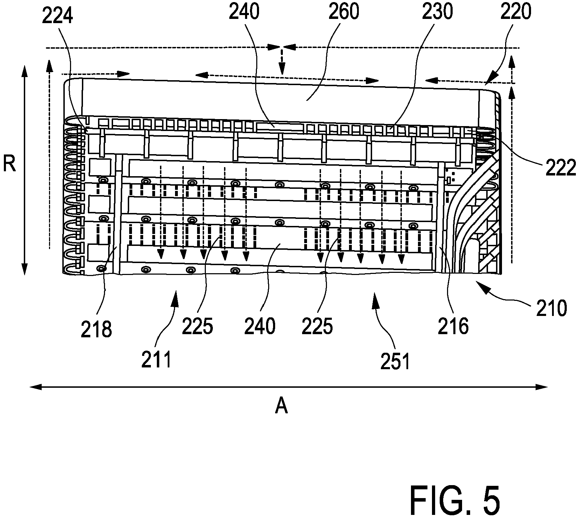

Figur 3 und Figur 4 zeigen jeweils eine schematische, dreidimensionale Ansicht einer bevorzugten Ausführungsform eines Statorsegments 200 im Wesentlichen in einer Umfangsrichtung U (Figur 3) und Axialrichtung A (Figur 4). In Figur 5 ist eine schematische, dreidimensionale Detailansicht des in Figur 3 dargestellten Statorsegments 200 gezeigt.

Das Spulenträgersegment 210 des in den Figuren 3 bis 5 dargestellten Statorsegments 200 weist eine erste und zweite Trägerplatte 216, 218 auf zwischen denen sich das Spulenträgersegment 210 in der Axialrichtung A mit einer Spulenträgersegmentbreite erstreckt. Ferner weist das Statorsegment 200 ein Stator-Blechpaket 220 mit einem ersten und zweiten Druckblech 222, 224 auf. Das Stator-Blechpaket 220 erstreckt sich zwischen dem ersten und zweiten Druckblech 222, 224 mit einer Stator-Blechpaketbreite, die größer ist als die Spulenträgersegmentbreite.

Es ist zu sehen, dass zwischen der ersten Trägerplatte 216 und dem ersten Druckblech 222 und zwischen der zweiten Trägerplatte 218 und dem zweiten Druckblech 224 mehrere benachbarte Stator-Blechstapel 230 der mindestens zwei Stator-Blechstapel 230 in der Axialrichtung A parallel zueinander beabstandet angeordnet sind und jeweils einen Stator-Kühlungskanal 225 bilden, durch welchen das Kühlungsmedium in der Radialrichtung R hindurchgeführt werden kann. Hierzu ist bevorzugt mindestens ein Abstandselement 231 zwischen den benachbart angeordneten Stator-Blechstapel 230 angeordnet. Das Kühlungsmedium wird in der Radialrichtung R von einer radial innenliegenden Stator-Innenumfangsfläche 251 in Richtung einer in Bezug zu der Stator-Innenumfangsfläche 251 radial außenliegenden Stator-Außenumfangsfläche 250 geführt. Es ist ferner zu sehen, dass, zwischen der ersten Trägerplatte 216 und der zweiten Trägerplatte 218 mehrere benachbarte Stator-Blechstapel 230 der mindestens zwei Stator-Blechstapel 230 in der Axialrichtung A parallel zueinander beabstandet angeordnet sind und jeweils einen Stator-Kühlungskanal 225 bilden, durch welchen das Kühlungsmedium in der Radialrichtung R hindurchgeführt werden kann. Das Kühlungsmedium wird in der Radialrichtung R von einer radial außenliegenden Stator-Außenumfangsfläche 250 in Richtung einer in Bezug zu der Stator-Außenumfangsfläche 250 radial innenliegenden Stator-Innenumfangsfläche 251 geführt. In der Axialrichtung A, mittig zwischen dem ersten und zweiten Druckblech 222, 224 des Stator-Blechpakets ist ferner eine Stator-Leitvorrichtung 240 angeordnet, welches die über einen von einem Rotorsegment 300 gebildeten Umfangsspalt 340 (nicht dargestellt) Luft nach axial außen in Richtung des ersten und zweiten Druckblechs 222, 224 zur Kühlung des Stator-Blechpakets 220 umleitet.

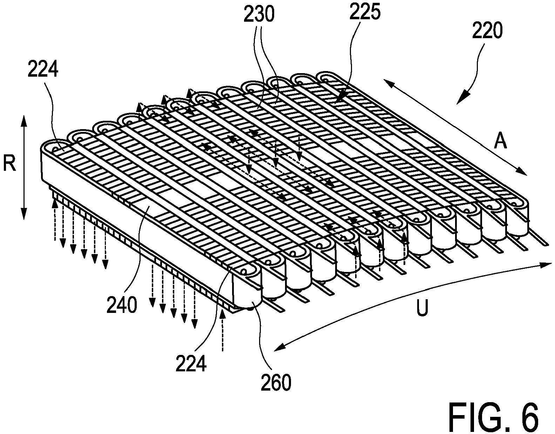

Figur 6 zeigt eine schematische, dreidimensionale Ansicht des zuvor beschriebenen Stator-Blechpakets 220. Insbesondere zeigt dieses Stator-Blechpaket 220 die zuvor beschriebene mittig angeordnete Stator-Leitvorrichtung 240. Die Stator-Leitvorrichtung 240 ist zum Umleiten und/oder Aufteilen eines nach innen in Radialrichtung R in Richtung der Stator-Leitvorrichtung 240 zugeführten Kühlungsmediums über eine Stator-Außenumfangsfläche 250 des Stator-Blechpakets 220 in der Axialrichtung A ausgebildet. Vorliegend weist die Stator-Leitvorrichtung 240 in der Axialrichtung A eine Stator-Leitvorrichtungsbreite auf, die größer ist als eine Breite eines Stator-Blechstapels 230. In der in Figur 6 dargestellten bevorzugten Ausführungsform des Stator-Blechpakets 220 ist die Stator-Leitvorrichtung 240 zwischen zwei Stator-Blechstapeln 230 mit der Stator-Kühlungskanalbreite beabstandet angeordnet und mittig zwischen dem ersten und zweiten Druckblech 222, 224 angeordnet. Es ist zu sehen, dass mehrere Stator-Blechstapel 230 zwischen dem ersten und/oder zweiten Druckblech 222, 224 bzw. zwischen der Stator-Leitvorrichtung 240 und dem ersten und/oder zweiten Druckblech 222, 224 äquidistant angeordnet sind.

An dem in Figur 6 dargestellten Stator-Blechpaket sind ferner zwölf Spuleneinheiten 260, beispielsweise aus Kupfer, angeordnet. Statorsegmente 200 aufweisend entsprechende Stator-Blechpakete 200 mit daran angeordneten Spuleneinheiten 260 sind auch den Figuren 3 bis 5 und 10 zu entnehmen.

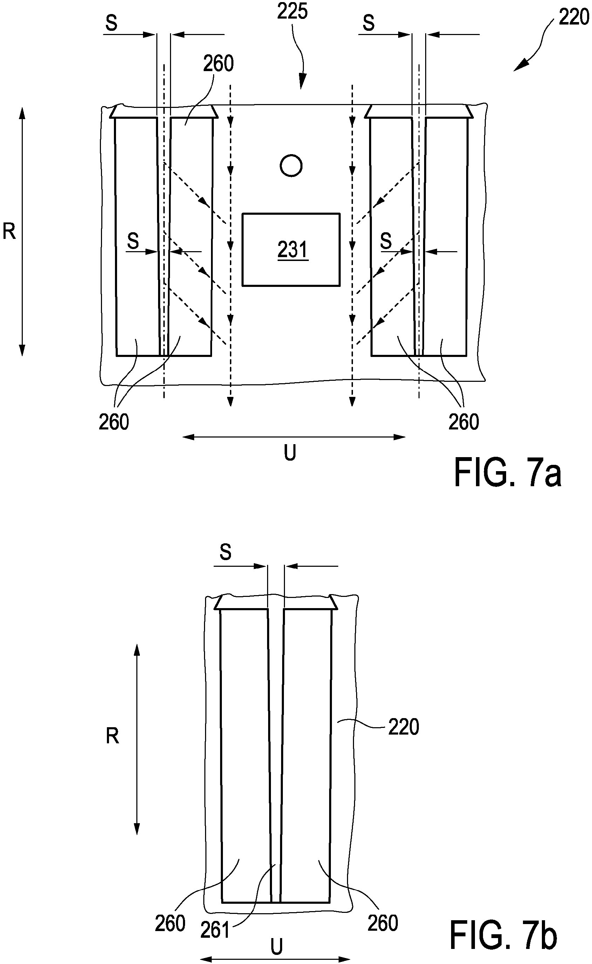

Figuren 7a und 7b zeigen eine schematische, zweidimensionale Schnittansicht eines Stator-Blechpakets 220 mir daran angeordneten Spuleneinheiten 260 in Axialrichtung A. Die an einem Stator-Blechpaket 220 angeordneten Spuleneinheiten 260 sind gegenüber benachbart angeordneten Spuleneinheiten 260 in der Umfangsrichtung U mit einem Spulenabstandsspalt S äquidistant zueinander angeordnet. Vorzugsweise ist der Spulenabstandsspalt S über eine Höhe in der Radialrichtung R und einer Länge in der Axialrichtung A konstant, wie dies beispielsweise in Figur 7a schematisch dargestellt ist. Es kann auch bevorzugt sein, dass der Spulenabstandsspalt S über eine Höhe in der Radialrichtung R variiert, insbesondere ausgehend von der Stator-Außenumfangsfläche in Richtung derStator-Innenumfangsfläche abnimmt, wie dies beispielsweise in Figur 7b schematisch dargestellt ist.

In der in Figur 7a dargestellten bevorzugten Ausführungsform ist der Spulenabstandsspalt S zwischen zwei benachbarten Spuleneinheiten 260 als Kühlungsmediumskanal ausgebildet, durch welchen das Kühlungsmedium in der Axialrichtung A hindurch bzw. entlang geführt werden kann. Das zwischen den Spuleneinheiten 260 in der Axialrichtung A strömende Kühlungsmedium wird den Stator-Kühlungskanälen 225, die sich zwischen benachbarten Stator-Blechstapeln 230 in Abhängigkeit des Abstandselement 231 erstrecken, zugeführt, durch welche das Kühlungsmedium in der Radialrichtung R hindurchgeführt werden kann. Dies führt in besonders vorteilhafter Weise zu einem zusätzlichen Kühlungseffekt, was wiederum den Wirkungsgrad eines Generators mit einem solchen Statorsegment erhöht. In der in Figur 7b dargestellten bevorzugten Ausführungsform ist in dem Spulenabstandsspalt S zwischen zwei benachbarten Spuleneinheiten 260 ein Isolierelement 261 angeordnet. Das Isolierelement 261 isoliert eine Spuleneinheit 260 gegenüber einer benachbart angeordneten Spuleneinheit 260 elektrisch.

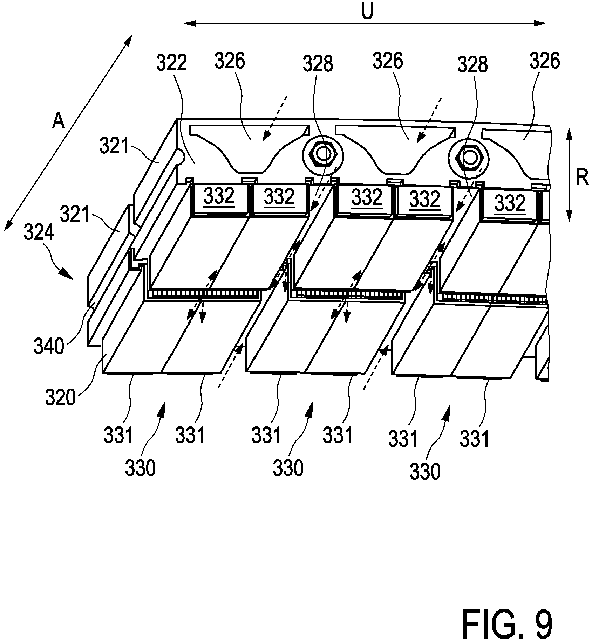

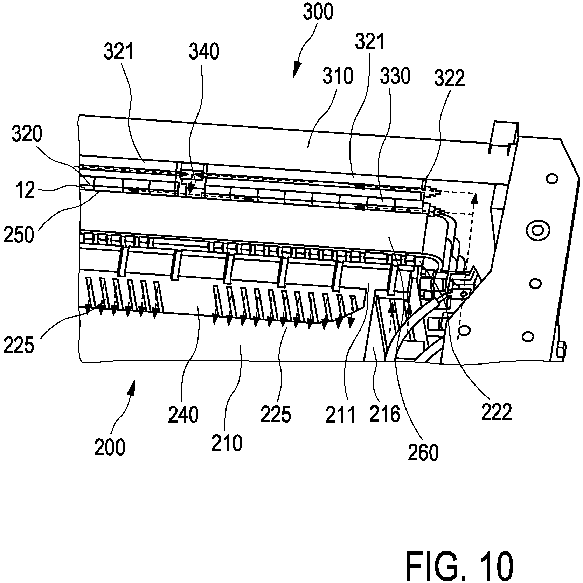

Figur 8 zeigt eine schematische, dreidimensionale Gesamtansicht einer bevorzugten Ausführungsform eines Rotorsegments 300. In Figur 9 ist eine schematische, dreidimensionale Detailansicht des in Figur 8 dargestellten Rotorsegments dargestellt. Ein solches Rotorsegment 300 umfasst ein Magnetträgersegment 310 mit einer ringförmigen oder teilringförmigen Geometrie und einer Rotor-Innenumfangsfläche 320 (nicht dargestellt). Ferner weist das Rotorsegment 300 mehrere Magneteinheiten 330 auf, die an dem Magnetträgersegment 310 in einer Umfangsrichtung U beabstandet zueinander angeordnet sind und die Rotor-Innenumfangsfläche 320 bilden bzw. definieren. In der Axialrichtung A sind mehrere Magneteinheiten 330 beabstandet zueinander angeordnet, wobei die in der Axialrichtung A benachbart angeordneten Magneteinheiten 330 einen Umfangsspalt 340 mit einer Spaltbreite zur Zufuhr und zum Verteilen eines Kühlungsmediums definieren. Dies ist beispielsweise in Figur 10 dargestellt.

Insbesondere zeigen Figuren 8 und 9 ein Rotor-Blechpaket 321 eines Rotorsegments 300 und daran angeordnete Magneteinheiten 330. In den Figuren 8 und 9 ist das Magnetträgersegment 310, der das Rotor-Blechpaket 321 aufweist, nicht dargestellt. Das Rotor-Blechpaket 321 erstreckt sich in der Axialrichtung A zwischen einem ersten und zweiten Druckblech 322, 324 und weist mehrere erste Zuführkanäle 326 für ein Kühlungsmedium auf. Der Kühlungskanal erstreckt sich zwischen dem ersten und/oder zweiten Druckblech 322, 324 und dem Umfangsspalt 340 innerhalb des Rotor-Blechpakets 321, um das Kühlungsmedium, welches an dem ersten und/oder zweiten Druckblech 322, 324 durch eine erste Öffnung in den ersten Zufuhrkanal 326 eintreten kann, zu dem Umfangsspalt 340 zu fördern, insbesondere in der Axialrichtung A, in welchen es durch eine zweite Öffnung austreten kann.

Die in den Figuren 8 und 9 dargestellten Magneteinheiten sind in der Umfangsrichtung U äquidistant angeordnet. Insbesondere bilden in dieser bevorzugten Ausführungsform des Rotorsegments die in der Umfangsrichtung U benachbart angeordnete Magneteinheiten 330 einen zweiten Zufuhrkanal 328 für ein Kühlungsmedium, um das Kühlungsmedium ausgehend von dem ersten und/oder zweiten Druckblech 322, 324 in Richtung des Umfangsspalts 340 in der Axialrichtung A zu fördern. In der vorliegenden Ausführungsform sind die Magneteinheiten 330 jeweils zweireihig ausgebildet, wobei die Magnetreihen in der Umfangsrichtung U zueinander äquidistant angeordnet sind. Die jeweilige Magnetreihe 331 wird aus mehreren Magnetblöcken 332 gebildet, die in der Axialrichtung A nebeneinander angeordnet sind. Die jeweilige Magnetreihe 331 ist vorzugsweise mit einer Magnetabdeckung abgedeckt. In Figur 8 ist jede zweite Magnetreihe 331 (aus Darstellungsgründen) ohne eine Magnetabdeckung gezeigt, so dass die einzelnen Magnetblöcke 332 einer Magnetreihe 331 sichtbar sind.

Figur 10 ist eine schematische, dreidimensionale Detailansicht eines Generatorsegments mit einem Statorsegment gemäß der in den Figuren 3 und 5 dargestellten bevorzugten Ausführungsform und einem Rotorsegment gemäß der in den Figuren 8 und 9 dargestellten bevorzugten Ausführungsform. Es ist zu sehen, dass das Rotorsegment 300, bzw. die Rotor-Innenumfangsfläche 320, in der Radialrichtung R mit einem Luftspalt 12 zu dem Statorsegment 200, insbesondere der Stator-Außenumfangsfläche 250 angeordnet ist. Es ist zu sehen, wie ausgehend von dem mittig des Rotorsegments 300 und zentriert zu der Stator-Leitvorrichtung 240 angeordneten Umfangsspalt 340 das der Stator-Leitvorrichtung 240 in der Radialrichtung R nach innen zugeführte Kühlungsmedium an der Stator-Leitvorrichtung 240 aufgeteilt und in der Axialrichtung A entlang der Stator-Außenumfangsfläche 250 und der Rotor-Innenumfangsfläche 320 in dem Luftspalt 12 umgeleitet wird. Ferner ist zu sehen, wie von außen in der Axialrichtung A ausgehend von dem ersten Druckblech 322 des Rotor-Blechpakets 321 durch den ersten Zufuhrkanal 326 das Kühlungsmedium dem Umfangsspalt 340 zugeführt wird und durch den zweiten Zufuhrkanal 328 der Stator-Außenumfangsfläche 250 und der Rotor-Innenumfangsfläche 320 in dem Luftspalt 12 das Kühlungsmedium zugeführt wird. Ferner ist auch zu sehen, wie das dem Luftspalt 12 zugeführte Kühlungsmedium von der Stator-Außenumfangsfläche 250 in der Radialrichtung R durch das Stator-Blechpaket in Richtung der radial innenliegenden Stator-Innenumfangsfläche 251 hindurchgeführt wird in Richtung einer in der Axialrichtung zwischen der ersten und zweiten Trägerplatte 216, 218 und radial weiter innenliegend angeordneten Kühlvorrichtung 400 (nicht dargestellt). Ferner ist in Figur 10 auch zu sehen, dass zwischen dem ersten Druckblech 222 und der ersten Trägerplatte 216 das Kühlungsmedium in der Radialrichtung durch einen Stator-Kühlungskanal 225 von einer radial innenliegenden Stator-Innenumfangsfläche 251 in Richtung einer in Bezug zu der Stator-Innenumfangsfläche 251 außenliegenden Stator-Außenumfangsfläche 250 strömt.

Figur 11 zeigt ein schematisches Ablaufdiagramm, das exemplarisch Schritte einer bevorzugten Ausführungsform eines Verfahrens 1000 zur Kühlung eines Generators 1, insbesondere eines segmentierten Generators 1, einer Windenergieanlage 100 darstellt. Das Verfahren 1000 umfasst ein Bereitstellen 1010 eines segmentierten Generators 1, wie er beispielsweise in Figur 2 in einer bevorzugten Ausführungsform dargestellt ist. Das Verfahren 1000 weist ferner den Schritt des Erzeugens 1020 eines Stroms eines Kühlungsmediums durch den bereitgestellten Generator 1 auf. Ferner umfasst das Verfahren 1000 die Schritte des Führens 1030 des Kühlungsmediums durch einen Stator-Kühlungskanal 225 eines Stator-Blechpakets 220 eines Statorsegments 200 des bereitgestellten Generators 1, insbesondere in einer Radialrichtung R und des Führens 1040 des Kühlungsmediums durch einen Umfangsspalt 340 eines Rotorsegments 300 des bereitgestellten Generators 1, insbesondere zwischen in einer Axialrichtung A beabstandet zueinander angeordneten Magneteinheiten 330.

Der Verfahrensschritt des Führens 1030 des Kühlungsmediums durch einen Stator-Kühlungskanal 225 umfasst insbesondere ein Führen des Kühlungsmediums durch einen Stator-Kühlungskanal 225, die in einer Axialrichtung A zwischen einer ersten und zweiten Trägerplatte 216, 218 angeordnet sind, von einer radial außenliegenden Stator-Außenumfangsfläche 250 in Richtung einer in Bezug zu der Stator-Außenumfangsfläche 250 innenliegenden Stator-Innenumfangsfläche 251.

Ergänzend und/oder alternativ umfasst das Führen ein Führen des Kühlungsmediums durch einen Stator-Kühlungskanal 225, die in einer Axialrichtung A zwischen einer ersten Trägerplatte 216 und einem ersten Druckblech 222 angeordnet sind und/oder zwischen einer zweiten Trägerplatte 218 und einem zweiten Druckblech 224 angeordnet sind, von einer radial innenliegenden Stator-Innenumfangsfläche 251 in Richtung einer in Bezug zu der Stator-Innenumfangsfläche 251 außenliegenden Stator-Außenumfangsfläche 250.

Es ist zu verstehen, dass der Schritt des Führens 1040 des Kühlungsmediums durch einen Umfangsspalt 340 insbesondere ein Zuführen und Verteilen des Kühlungsmediums von dem Umfangsspalt 340 auf dem Stator-Blechpaket 220, insbesondere über eine Stator-Außenumfangsfläche 250 umfasst.

Ferner kann bevorzugt sein, dass das Verfahren 1000 ein Umleiten und/oder Aufteilen 1050 des von dem Umfangsspalt 340 zugeführten Kühlungsmediums mit einer Stator-Leitvorrichtung 240 über eine Stator-Außenumfangsfläche 250, insbesondere in einer Axialrichtung A umfasst.

Ergänzend und/oder alternativ kann das Verfahren 1000 ein Zuführen des Kühlungsmediums zu dem Umfangsspalt 340, insbesondere durch einen ersten Zufuhrkanal 326, der sich ausgehend von einem ersten und/oder zweiten Druckblech 322, 324 eines Magnetträgersegments 310 bis zu dem Umfangsspalt 340 erstreckt und/oder ein Zuführen des Kühlungsmediums zu der Stator-Außenumfangsfläche 250 in Richtung des Umfangsspalts 340 durch einen zweiten Zufuhrkanal 328, der sich ausgehend von einem ersten und/oder zweiten Druckblech 322, 324 eines Magnetträgersegments 310 in Richtung des Umfangsspalts 340 erstreckt, umfassen.

Insbesondere kann auch bevorzugt sein, ein Führen 1080 des Kühlungsmediums durch einen Spulenabstandsspalt S eines Rotorsegments 300 des bereitgestellten Generators 1, insbesondere zwischen in einer Umfangsrichtung U beabstandet zueinander angeordneten Spuleneinheiten 260 der mindestens einen Spuleneinheit 260, insbesondere in der Radialrichtung R. In Figur 7a ist ein Stator-Blechpaket mit einem entsprechenden Spulenabstandsspalt S eines Statorsegments 200 gezeigt.

In den Figuren 2, 5, 9 und 10 ist ein gemäß dem Verfahren 1000 erzeugter 1020 und geführter 1030, 1040 eines Stroms eines Kühlungsmediums innerhalb eines bereitgestellten 1010 Generators 1 bzw. Generatorsegment 10 sowie entsprechenden Stator- und Rotorsegment 200, 300 schematisch dargestellt (gestrichelte Pfeile).

### BEZUGSZEICHENLISTE

- 1: Generator
- 10: Generatorsegment
- 12: Luftspalt
- 100: Windenergieanlage
- 102: Turm
- 104: Gondel
- 106: Rotor
- 106a: aerodynamischer Rotor
- 108: Rotorblätter
- 109: Stator
- 110: Spinner
- 200: Statorsegment
- 210: Spulenträgersegment
- 211: Stator-Umfangsstruktur
- 216: erste Trägerplatte
- 218: zweite Trägerplatte
- 220: Stator-Blechpaket
- 222: erstes Druckblech des Stator-Blechpakets
- 224: zweites Druckblech des Stator-Blechpakets
- 225: Stator-Kühlungskanal
- 230: Stator-Blechstapel
- 231: Abstandselement
- 240: Stator-Leitvorrichtung
- 250: Stator-Außenumfangsfläche
- 251: Stator-Innenumfangsfläche
- 260: Spuleneinheit
- 261: Isolierelement
- 300: Rotorsegment
- 310: Magnetträgersegment
- 320: Rotor-Innenumfangsfläche
- 321: Rotor-Blechpaket
- 322: erstes Druckblech
- 324: zweites Druckblech
- 326: erster Zufuhrkanal
- 328: zweiter Zufuhrkanal
- 330: Magneteinheit
- 331: Magnetreihen
- 332: Magnetblöcke
- 340: Umfangsspalt
- 400: Kühlvorrichtung
- A: Axialrichtung
- R: Radialrichtung
- S: Spulenabstandsspalt
- U: Umfangsrichtung

## Patentansprüche

1. Generator (1), insbesondere segmentierter Generator (1), einer Windenergieanlage (100), umfassend einen Stator (109), insbesondere einen Stator (109) nach Anspruch 8, und einen Rotor (106), insbesondere einen Rotor (106) nach Anspruch 11.

2. Statorsegment (200) eines Stators (109) eines Generators (1), insbesondere eines segmentierten Stators (109) eines segmentierten Generators (1), für eine Windenergieanlage (100), umfassend
- ein Spulenträgersegment (210) mit einer ringförmigen oder teilringförmigen Geometrie und einer Stator-Umfangsstruktur (211); und
- mindestens ein Stator-Blechpaket (220), das zur Aufnahme mindestens einer Spuleneinheit (260) ausgebildet ist und an der Stator-Umfangsstruktur (211) angeordnet ist;
**dadurch gekennzeichnet, dass**
- das mindestens eine Stator-Blechpaket (220) mindestens zwei Stator-Blechstapel (230) aufweist, wobei jeweils benachbarte Stator-Blechstapel (230) der mindestens zwei Stator-Blechstapel (230) in einer Axialrichtung (A) parallel zueinander beabstandet angeordnet sind und jeweils einen Stator-Kühlungskanal (225) mit einer Stator-Kühlungskanalbreite bilden, durch welchen ein Kühlungsmedium hindurchgeführt werden kann, insbesondere in einer Radialrichtung (R).

3. Statorsegment (200) nach dem vorhergehenden Anspruch, das Stator-Blechpaket (220) umfassend eine Stator-Leitvorrichtung (240) zum Umleiten und/oder Aufteilen eines nach innen, insbesondere in der Radialrichtung (R), in Richtung der Stator-Leitvorrichtung (240) zugeführten Kühlungsmediums über eine Stator-Außenumfangsfläche (250) des mindestens einen Stator-Blechpakets, insbesondere in der Axialrichtung (A), wobei vorzugsweise die Stator-Leitvorrichtung (240) in der Axialrichtung (A) eine Stator-Leitvorrichtungsbreite aufweist, die größer ist als eine Breite eines Stator-Blechstapels (230) der mindestens zwei Stator-Blechstapel (230).

4. Statorsegment (200) nach einem der vorhergehenden Ansprüche 2-3, wobei
- das Spulenträgersegment (210) eine erste und zweite Trägerplatte (216, 218) aufweist, zwischen denen sich das Spulenträgersegment (210) in der Axialrichtung (A) mit einer Spulenträgersegmentbreite erstreckt, und das Stator-Blechpaket (220) ein erstes und zweites Druckblech (224) aufweist, zwischen denen sich das Stator-Blechpaket (220) mit einer Stator-Blechpaketbreite erstreckt, die insbesondere größer ist als die Spulenträgersegmentbreite;
wobei vorzugsweise
- zwischen der ersten Trägerplatte (216) und der zweiten Trägerplatte (218) mindestens zwei benachbarte Stator-Blechstapel (230) der mindestens zwei Stator-Blechstapel (230) in der Axialrichtung (A) parallel zueinander beabstandet angeordnet sind und jeweils einen Stator-Kühlungskanal (225) bilden, durch welchen das Kühlungsmedium, insbesondere in der Radialrichtung (R), hindurchgeführt werden kann, insbesondere von einer radial außenliegenden Stator-Außenumfangsfläche (250) in Richtung einer in Bezug zu der Stator-Außenumfangsfläche (250) radial innenliegenden Stator-Innenumfangsfläche (250); und/oder
- zwischen der ersten Trägerplatte (216) und dem ersten Druckblech (222) und/oder zwischen der zweiten Trägerplatte (218) und dem zweiten Druckblech (224) mindestens zwei benachbarte Stator-Blechstapel (230) der mindestens zwei Stator-Blechstapel (230) in der Axialrichtung (A) parallel zueinander beabstandet angeordnet sind und jeweils einen Stator-Kühlungskanal (225) bilden, durch welchen das Kühlungsmedium, insbesondere in der Radialrichtung (R), hindurchgeführt werden kann, insbesondere von einer radial innenliegenden Stator-Innenumfangsfläche (251) in Richtung einer in Bezug zu der Stator-Innenumfangsfläche (251) radial außenliegenden Stator-Außenumfangsfläche (250); und/oder
- die Stator-Leitvorrichtung (240)
∘ zwischen zwei Stator-Blechstapeln (230) der mindestens zwei Stator-Blechstapel (230) in der Axialrichtung (A) beabstandet angeordnet ist, insbesondere jeweils mit der Stator-Kühlungskanalbreite beabstandet angeordnet ist; und/oder
∘ zwischen dem ersten und zweiten Druckblech (222, 224), insbesondere mittig, angeordnet ist.

5. Statorsegment (200) nach einem der vorhergehenden Ansprüche 2-4, wobei mehrere Stator-Blechstapel (230) der mindestens zwei Stator-Blechstapel (230) zwischen dem ersten und/oder zweiten Druckblech (222, 224), insbesondere zwischen der Stator-Leitvorrichtung (240) und dem ersten und/oder zweiten Druckblech (222, 224), äquidistant angeordnet sind.

6. Statorsegment (200) nach einem der vorhergehenden Ansprüche 2-5,
- umfassend mindestens eine Spuleneinheit (260), die an dem mindestens einen Stator-Blechpaket (220) angeordnet ist, wobei vorzugsweise die mindestens eine Spuleneinheit (260) aus dem Material Kupfer besteht oder dieses umfasst; und/oder
- wobei in der Umfangsrichtung (U) benachbarte Spuleneinheiten (260) der mindestens einen Spuleneinheit (260) mit einem Spulenabstandsspalt (S), insbesondere äquidistant, zueinander angeordnet sind; wobei vorzugsweise
- der Spulenabstandsspalt (S) zwischen zwei benachbarten Spuleneinheiten (260) der mindestens einen Spuleneinheit (260) als Kühlungsmediumskanal ausgebildet ist, durch welchen das Kühlungsmedium hindurchgeführt werden kann, insbesondere in der Radialrichtung (R); und/oder
- in dem Spulenabstandsspalt (S) zwischen zwei benachbarten Spuleneinheiten (260) der mindestens einen Spuleneinheit (260) ein Isolierelement (261) angeordnet ist, welches vorzugsweise eine Spuleneinheit (260) der mindestens einen Spuleneinheit (260) gegenüber einer benachbart angeordneten Spuleneinheit (260) der mindestens einen Spuleneinheit (260) elektrisch isoliert.

7. Statorsegment (200) nach einem der vorhergehenden Ansprüche 2-6, umfassend eine Kühlvorrichtung (400) und/oder eine Kühlungsmediumleitvorrichtung, die, insbesondere in der Axialrichtung, zwischen der ersten und zweiten Trägerplatte (216, 218) angeordnet ist und das Kühlungsmedium durch die zwischen der ersten und zweiten Trägerplatte (216, 218) angeordneten Startor-Kühlungskanäle nach innen fördert, insbesondere von der radial außenliegenden Stator-Außenumfangsfläche (250) in Richtung der radial innenliegenden Stator-Innenumfangsfläche (251);
die Kühlvorrichtung (400) vorzugsweise umfassend:
- eine Kühlungsmediumfördereinheit, vorzugsweise eine Lüftereinheit, insbesondere einen Ventilator, zum Erzeugen eines Stroms des Kühlungsmediums; und/oder
- eine Wärmetauschereinheit zum Abkühlen des erwärmten Kühlungsmediums, wobei vorzugsweise die Wärmetauschereinheit in der Radialrichtung (R) zwischen der Lüftereinheit und dem Spulenträgersegment (210) angeordnet ist, und vorzugsweise die Wärmetauschereinheit eine Fluid-Luft-Wärmetauschereinheit ist; und/oder
Kühlungsmediumleitvorrichtung vorzugsweise umfassend:
- eine oder mehrere Kühlungsmediumleitungen; und/oder
- ein oder mehrere Kühlungsmediumleitelemente.

8. Stator (109) eines Generators (1), insbesondere segmentierter Stator (109) eines segmentierten Generators (1), einer Windenergieanlage (100), umfassend ein ringförmig ausgebildetes Statorsegment (200) nach einem der vorhergehenden Ansprüche 2-7 oder mehrere teilringförmig ausgebildete Statorsegmente (200) nach einem der vorhergehenden Ansprüche 2-7, die ringförmig angeordnet sind.

9. Rotorsegment (300) eines Rotors (106), insbesondere eines segmentierten Rotors (106) eines segmentierten Generators (1), für eine Windenergieanlage (100), umfassend
- ein Magnetträgersegment (310) mit einer ringförmigen oder teilringförmigen Geometrie und einer Rotor-Innenumfangsfläche (320), und
- mehrere Magneteinheiten (330), die an dem Magnetträgersegment (310) in einer Umfangsrichtung (U) beabstandet zueinander angeordnet sind und die Rotor-Innenumfangsfläche (320) bilden bzw. definieren,
**dadurch gekennzeichnet, dass**
- in einer Axialrichtung (A) zwei oder mehrere Magneteinheiten (330) der mehreren Magneteinheiten (330) beabstandet zueinander angeordnet sind, wobei die in der Axialrichtung (A) benachbart angeordneten Magneteinheiten (330) einen Umfangsspalt (340) mit einer Spaltbreite zur Zufuhr und zum Verteilen eines Kühlungsmediums definieren.

10. Rotorsegment (300) nach dem vorhergehenden Anspruch, wobei
- das Magnetträgersegment (310) mindestens ein Rotor-Blechpaket (321) aufweist, das sich in der Axialrichtung (A) zwischen einem ersten und zweiten Druckblech (322, 324) erstreckt und mindestens einen ersten Zufuhrkanal (326) für ein Kühlungsmedium aufweist, der sich zwischen dem ersten und/oder zweiten Druckblech (322, 324) und dem Umfangsspalt (340), insbesondere innerhalb des Rotor-Blechpakets (321), erstreckt, um das Kühlungsmedium, welches an dem ersten und/oder zweiten Druckblech (322, 324) durch eine erste Öffnung in den ersten Zufuhrkanal (326) eintreten kann, zu dem Umfangsspalt (340) zu fördern, insbesondere in der Axialrichtung (A), in welchen es durch eine zweite Öffnung austreten kann; und/oder
- die mehreren Magneteinheiten (330) in einer Umfangsrichtung (U) äquidistant angeordnet sind; und/oder
- in der Umfangsrichtung (U) benachbart angeordnete Magneteinheiten (330) einen zweiten Zufuhrkanal (328) für ein Kühlungsmedium definieren, um das Kühlungsmedium ausgehend von dem ersten und/oder zweiten Druckblech (322, 324) in Richtung des Umfangsspalts (340) zu fördern, insbesondere in der Axialrichtung (A); und/oder
- die Magneteinheiten (330) eine, zwei oder mehr Magnetreihen (331) umfassen, die vorzugsweise in der Umfangsrichtung (U) zueinander beabstandet, insbesondere äquidistant, angeordnet sind; und/oder
- eine Magnetreihe (331) einen oder mehrere Magnetblöcke (332) umfasst, die vorzugsweise in der Axialrichtung (A) nebeneinander angeordnet sind.

11. Rotor (106) eines Generators (1), insbesondere segmentierter Rotor (106) eines segmentierten Generators (1), einer Windenergieanlage (100), umfassend ein ringförmig ausgebildetes Rotorsegment (300) nach einem der vorhergehenden Ansprüche 9-10 oder mehrere teilringförmig ausgebildete Rotorsegmente (300) nach einem der vorhergehenden Ansprüche 9-10, die ringförmig angeordnet sind.

12. Generator (1) nach Anspruch 1, wobei der Stator (109) und der Rotor (106) einen Generatorinnenraum definieren, umfassend eine Dichtungsvorrichtung die den Generatorinnenraum gegenüber einer Umgebung im Wesentlichen luftdicht und/oder staubdicht abdichtet, wobei vorzugsweise die Dichtungsvorrichtung eine Labyrinthdichtungseinheit und/oder eine Bürsteneinheit umfasst.

13. Windenergieanlage (100) umfassend einen Generator (1) nach einem der vorhergehenden Ansprüche 1 oder 12.

14. Verfahren zur Kühlung eines Generators (1), insbesondere eines segmentierten Generators (1), einer Windenergieanlage (100), **gekennzeichnet durch** die Schritte:
- Bereitstellen eines Generators (1) nach Anspruch 1 oder 12; und
- Erzeugen eines Stroms eines Kühlungsmediums durch den bereitgestellten Generator (1); und
- Führen des Kühlungsmediums durch einen Stator-Kühlungskanal (225) eines Stator-Blechpakets (220) eines Statorsegments (200) des bereitgestellten Generators (1), insbesondere in einer Radialrichtung (R); und/oder
- Führen des Kühlungsmediums durch einen Umfangsspalt (340) eines Rotorsegments (300) des bereitgestellten Generators (1), insbesondere zwischen in einer Axialrichtung (A) beabstandet zueinander angeordneten Magneteinheiten (330); und/oder
- Führen des Kühlungsmediums durch einen Spulenabstandsspalt (S) eines Statorsegments (200) des bereitgestellten Generators (1), insbesondere zwischen in einer Umfangsrichtung (U) beabstandet zueinander angeordneten Spuleneinheiten (260) der mindestens einen Spuleneinheit (260), insbesondere in der Radialrichtung (R).

15. Verfahren nach dem vorhergehenden Anspruch, wobei
- der Schritt des Führens des Kühlungsmediums durch einen Stator-Kühlungskanal (225) insbesondere folgende Schritte umfasst:
∘ Führen des Kühlungsmediums durch einen Stator-Kühlungskanal (225), die in einer Axialrichtung (A) zwischen einer ersten und zweiten Trägerplatte (216, 218) angeordnet sind, von einer radial außenliegenden Stator-Außenumfangsfläche (250) in Richtung einer in Bezug zu der Stator-Außenumfangsfläche (250) innenliegenden Stator-Innenumfangsfläche (251); und/oder
∘ Führen des Kühlungsmediums durch einen Stator-Kühlungskanal (225), die in einer Axialrichtung (A) zwischen einer ersten Trägerplatte (216) und einem ersten Druckblech (222) angeordnet sind und/oder zwischen einer zweiten Trägerplatte (218) und einem zweiten Druckblech (224) angeordnet sind, von einer radial innenliegenden Stator-Innenumfangsfläche (251) in Richtung einer in Bezug zu der Stator-Innenumfangsfläche (251) außenliegenden Stator-Außenumfangsfläche (250); und/oder
- der Schritt des Führens des Kühlungsmediums durch einen Umfangsspalt (340) insbesondere folgenden Schritt umfasst:
∘ Zuführen und Verteilen des Kühlungsmediums von dem Umfangsspalt (340) auf dem Stator-Blechpaket (220), insbesondere über eine Stator-Außenumfangsfläche (250); und/oder
das Verfahren ferner vorzugsweise folgende Schritte umfasst:
- Umleiten und/oder Aufteilen des von dem Umfangsspalt (340) zugeführten Kühlungsmediums mit einer Stator-Leitvorrichtung (240) über eine Stator-Außenumfangsfläche (250), insbesondere in einer Axialrichtung (A); und/oder
- Zuführen des Kühlungsmediums zu dem Umfangsspalt (340), insbesondere durch einen ersten Zufuhrkanal (326), der sich ausgehend von einem ersten und/oder zweiten Druckblech (322, 324) eines Magnetträgersegments (310) bis zu dem Umfangsspalt (340) erstreckt; und/oder
- Zuführen des Kühlungsmediums zu der Stator-Außenumfangsfläche (250) in Richtung des Umfangsspalts (340) durch einen zweiten Zufuhrkanal (328), der sich ausgehend von einem ersten und/oder zweiten Druckblech (322, 324) eines Magnetträgersegments (310) in Richtung des Umfangsspalts (340) erstreckt.
